# EUROPÄISCHE PATENTSCHRIFT

(11) **EP 2 523 585 B1**
(45) Veröffentlichungstag und Bekanntmachung des Hinweises auf die Patenterteilung: **04.06.2014**
(21) Anmeldenummer: 11710112.1
(22) Anmeldetag: 14.01.2011
(51) Int. Cl.: A47J 31/30

(54) **VORRICHTUNG NACH DEM STEIGROHRPRINZIP FÜR DIE ZUBEREITUNG EINES HEISSGETRÄNKS, INSBESONDERE ESPRESSOKANNE**
PERCOLATOR-TYPE DEVICE FOR PREPARING HOT DRINKS, ESPECIALLY ESPRESSO MAKER
DISPOSITIF À CHEMINÉE POUR LA PRÉPARATION D'UNE BOISSON CHAUDE, NOTAMMENT CAFETIÈRE À EXPRESSO

(30) Priorität: 14.01.2010 DE 102010004729
(43) Veröffentlichungstag der Anmeldung: 21.11.2012
(73) Patentinhaber: WMF AG, 73312 Geislingen/Steige (DE)
(72) Erfinder: CASADO GOMEZ, Sebastian, 70329 Stuttgart (DE); DÖPPE, Matthias, 89129 Langenau (DE); NEUMAYER, Martin, 89547 Gerstetten-Dettingen (DE); WEBER, Michael, 73084 Salach (DE)
(74) Vertreter: Pfenning, Meinig & Partner GbR
(86) Internationale Anmeldenummer: PCT/DE2011/000036
(87) Internationale Veröffentlichungsnummer: WO 2011/085725

(56) Entgegenhaltungen:
- WO-A1-98/17160
- WO-A1-2008/128609
- WO-A1-2009/065166
- DE-U1- 20 318 806
- FR-A1- 2 507 459
- US-A1- 2005 109 213

## Beschreibung

Die vorliegende Erfindung bezieht sich auf eine Vorrichtung nach dem Steigrohrprinzip für die Zubereitung eines Heißgetränks, insbesondere auf eine entsprechende Vorrichtung zur Zubereitung von Kaffeeoder Teespezialitäten.

Bei der erfindungsgemäßen Vorrichtung handelt es sich dabei um eine Vorrichtung, die als Steigrohrmaschine ohne jegliche elektrische und elektromechanische Bauteile ausgeführt sein kann.

Die WO 2008/128609 A1 zeigt zwei zum Milch Aufschäumen geeignete Steigrohrmaschinen, von denen eine nach dem Ausblasprinzip über eine Düse arbeitet. Die zweite Variante arbeitet mit einer Venturidüse.

Die FR 2 507 459 A1 zeigt eine Steigrohrmaschine mit einer auf Druck ansprechenden Einrichtung (z.B. Druckentlastungsventil) im Steigrohr. Das im Steigrohr angeordnete Ventil öffnet nur dann, wenn ein vorbestimmter Druck erreicht ist.

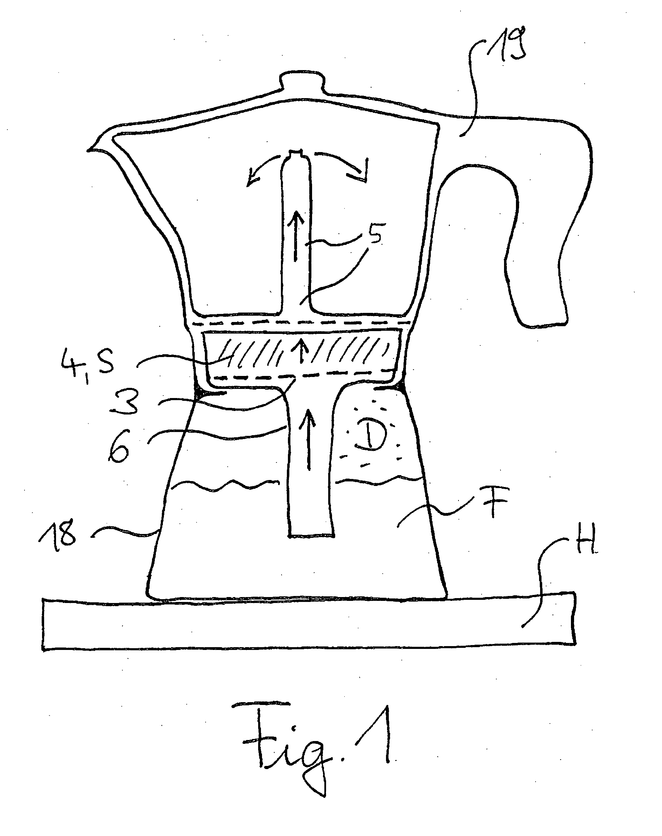

Aus dem Stand der Technik sind bereits Vorrichtungen nach dem Steigrohrprinzip für die Zubereitung eines Heißgetränks bekannt. Figur 1 zeigt ein Beispiel für eine derartige Vorrichtung in Form einer Espressokanne. Die abgebildete Espressokanne umfasst einen unteren Gehäuseabschnitt 18, der, aus einem hitzebeständigen Metall gebildet, auf eine Hitzequelle H (z.B. einen Elektroherd) aufgesetzt werden kann. Im Inneren des unteren Gehäuseabschnitts 18 befindet sich eine Flüssigkeit F (Wasser), die dadurch in den unteren Gehäuseabschnitt eingefüllt werden kann, dass der untere Gehäuseabschnitt 18 vom nachfolgend beschriebenen oberen Gehäuseabschnitt 19 durch Auseinanderschrauben der beiden Abschnitte getrennt wird.

Die gezeigte Vorrichtung weist einen zum Einsetzen in den untere Gehäuseabschnitt 18 und den oberen Gehäuseabschnitt 19 gebildeten Einsatz auf, der aus einem Steigrohr 6, einem darüber ausgebildeten Einlassfilter 3 und einem darüber ausgebildeten Durchflussvolumen 4 besteht. In das Durchflussvolumen 4 kann Kaffee S eingefüllt werden. Nach Einsetzen des Einsatzes und Verschrauben der beiden Gehäuseabschnitte 18 und 19 schließt sich oberhalb des Einsatzes bzw. des Durchflussvolumens 4 ein zweiter Filter (Auslassfilter) sowie ein weiterer Rohrabschnitt an. Dieser weitere Rohrabschnitt bildet zusammen mit dem Auslassfilter einen Auslassabschnitt 5, der in das Innere eines im oberen Gehäuseabschnitt ausgebildeten Sammelbehälters führt.

Wird die Flüssigkeit F durch die Hitzequelle H erhitzt, so bildet sich im Inneren des Gehäuseabschnitts 18 ein Überdruck in der Flüssigkeitsdampf-Atmosphäre D oberhalb der Flüssigkeit F der dazu führt, dass die heiße Flüssigkeit F durch den Steigrohrabschnitt 6, den unteren Einlassfilter 3, das mit Kaffee S gefüllte Durchflussvolumen 4, den oberen Auslassfilter und den sich diesem Filter anschließenden Rohrabschnitt in den Sammelbehälter gedrückt wird.

Espressokocher nach dem vorbeschriebenen Prinzip (die zuweilen auch als Mokkakocher bezeichnet werden) sind seit vielen Jahren bekannt. Sie haben jedoch eine Reihe von Nachteilen und darunter insbesondere den, dass mit ihnen bezüglich des zubereiteten Getränks lediglich sehr geringe Geschmacksvariationen möglich sind.

Aufgabe der vorliegenden Erfindung ist es daher ausgehend vom Stand der Technik eine Vorrichtung nach dem Steigrohrprinzip (also eine Vorrichtung, die grundsätzlich ohne jegliche elektrische und/oder elektromechanische Komponenten auskommt - dies schließt jedoch nicht aus, dass ggf. Einzelteile einer solchen Vorrichtung elektrische oder elektromechanische Komponenten einsetzen) so weiterzubilden, dass die mit ihr zubereitbaren Heißgetränke eine größere Geschmacksvariabilität und/oder Variabilität in der Zubereitung aufweisen.

Diese Aufgabe wird durch eine Vorrichtung gemäß Patentanspruch 1 gelöst. Vorteilhafte Ausgestaltungsvarianten lassen sich den abhängigen Patentansprüchen entnehmen.

Nachfolgend wird die vorliegende Erfindung zunächst allgemein, dann in Form von zwei Ausführungsbeispielen beschrieben.

Die in den erfindungsgemäßen Ausführungsbeispielen in Kombination miteinander verwirklichten Einzelmerkmale müssen dabei im Rahmen der vorliegenden Erfindung (deren Schutzbereich durch die Ansprüche definiert ist) nicht genau in der gezeigten Bauform verwirklicht werden, sondern können im durch die Schutzansprüche vorgegebenen Rahmen auch in anderen Kombinationen verwirklicht sein. Insbesondere können einzelne der gezeigten Merkmale auf andere Art und Weise mit weiteren gezeigten Einzelmerkmalen kombiniert werden oder es können auch einzelne der gezeigten Merkmale weggelassen werden.

Sofern nicht anders gesagt, wird im Rahmen der nachfolgenden Beschreibung der Erfindung unter einem "Abschnitt" eine zur Fluidführung geeignete Struktur verstanden. Eine solche Struktur kann aus mehreren miteinander verbundenen Einzelteilen, die dann eine gewünschte Flüssigkeits- und/oder Dampfführung ermöglichen, realisiert sein. So können z.B. mehrere Rohrabschnitte miteinander verbunden sein, in die Ventile oder andere Stellglieder integriert sein können, mit denen z.B. eine Flüssigkeitsführung unterbrochen und wieder ermöglicht werden kann.

Wird nachfolgend davon gesprochen, dass Elemente miteinander verbunden sind (z.B. Verbindung eines Steigrohrabschnitts mit einem Einlass) so bedeutet dies, sofern nichts Anderes gesagt ist, dass diese Elemente so miteinander verknüpft werden, dass eine Flüssigkeits- und/oder Dampfleitung zwischen den Elementen und/oder durch diese Elemente realisiert erfolgen kann.

Wird nachfolgend von einem aktiven Öffnen oder Verschließen eines Elementes gesprochen, so ist damit, sofern nichts Anderes gesagt ist, gemeint, dass das entsprechende Element hinsichtlich seines Öffnungsoder Schließgrades regelbar ist, wobei der entsprechende Öffnungs- oder Schließzustand durch einen unabhängig von den herrschenden Umgebungsbedingungen (z.B. den vorliegenden Temperatur-, Druck- und/oder Feuchtigkeitsverhältnissen) durchführbaren bzw. iniziierbaren Eingriff hergestellt werden kann. Bei einem solchen Eingriff kann es sich z.B. um einen manuellen Eingriff handeln (manuelles Schließen oder Öffnen eines Ventils) oder es kann sich um einen automatisch geregelten Eingriff handeln, der (z.B. auf Basis gemessener Umgebungsbedingungen, jedoch unabhängig vom Zeitpunkt des Eintretens solcher Umgebungsbedingungen) einen vordefinierten Öffnungs- oder Schließzustand einstellt.

Entsprechend der vorstehenden Definition handelt es sich somit z.B. bei einem Sicherheitsventil, das bei Überschreiten eines bestimmten Drucks zwangsweise öffnet, nicht um ein entsprechendes aktives Element, sondern um ein passives Element zur Flüssigkeitsund/oder Dampfführung.

Eine wesentliche Idee der vorliegenden Erfindung ist im Unterschied zum Stand der Technik, das Dampfvolumen D oberhalb der (erhitzten) Flüssigkeit F zu nutzen. Diese Nutzung kann auf unterschiedliche Art und Weise realisiert werden, dies wird nachfolgend noch im Detail beschrieben.

Eine erfindungsgemäße Vorrichtung nach dem Steigrohrprinzip weist einen Flüssigkeitsbehälter auf. Dieser ist so ausgebildet, dass die in ihm befindliche Flüssigkeit mittels einer externen Heizquelle wie beispielsweise einem Herd erhitzt werden kann. Dies kann dadurch geschehen, dass der Flüssigkeitsbehälter selbst (z.B. in Form eines Gehäuseabschnitts der Vorrichtung) unmittelbar auf eine solche Heizquelle aufgestellt wird. Grundsätzlich ist es jedoch auch denkbar, dass die Flüssigkeit außerhalb des Flüssigkeitsbehälters erhitzt wird und diesem dann im erhitzten Zustand zugeführt wird.

Der Flüssigkeitsbehälter ist mit einem Durchströmabschnitt verbunden, der einen Einlass für die erhitzte Flüssigkeit aus dem Flüssigkeitsbehälter aufweist. Dem Einlass schließt sich ein Durchflussvolumen des Durchströmabschnitts an, in das ein von der Flüssigkeit zu durchströmender Stoff (insbesondere Kaffeepulver oder Teeblätter) angeordnet werden kann. Dem Durchflussvolumen schließt sich ein Auslassabschnitt des Durchströmabschnitts an, über den Flüssigkeit, die im Durchflussvolumen den Stoff durchströmt hat, abführbar ist, z.B. in ein externes Gefäß wie z.B. eine Tasse. Damit der zu durchströmende Stoff vom Flüssigkeitsbehälter einerseits und vom die Flüssigkeit auffangenden Behältnis (z.B. Tasse) andererseits ferngehalten wird, weist in der Regel der Einlass ein entsprechendes Sieb bzw. einen entsprechenden Filter auf. Entsprechendes gilt für den Auslassabschnitt.

Die Vorrichtung umfasst darüber hinaus einen Steigrohrabschnitt, der den Flüssigkeitsbehälter über den Einlass des Durchströmabschnitts mit dem Durchflussvolumen des Durchströmabschnitts verbindet und so ausgebildet ist, dass bei ausreichendem Druck im Flüssigkeitsbehälter die erhitzte Flüssigkeit durch den Steigrohrabschnitt, den Einlass, das Durchflussvolumen und den Auslassabschnitt gedrückt wird.

Erfindungsgemäß weist nun die Vorrichtung darüber hinaus einen mit dem Flüssigkeitsbehälter verbundenen Dampfableitungsabschnitt auf, mittels dessen von erhitzter Flüssigkeit stammender, unter Druck stehender Dampf aus dem Flüssigkeitsbehälter abgeführt werden kann. Dieser kann beispielsweise ein am oberen Ende des Flüssigkeitsbehälters aus letzterem wegführendes Rohr umfassen, das so ausgebildet ist (einen ausreichenden Mindestdruck im Flüssigkeitsbehälter vorausgesetzt), dass Flüssigkeitsdampf aus dem Flüssigkeitsbehälter ableitbar und außerhalb des Flüssigkeitsbehälters für verschiedenste Aufgaben nutzbar ist (siehe nachfolgend). Vorteilhafterweise sind der Durchströmabschnitt und/oder der Steigrohrabschnitt einerseits und der Dampfableitungsabschnitt andererseits aktiv und unabhängig voneinander verschließbar (bzw. können entsprechend unabhängig voneinander geöffnet werden). Dies kann beispielsweise durch im Durchströmabschnitt und im Dampfableitungsabschnitt ausgebildete und unabhängig voneinander ansteuerbare Ventile realisiert werden.

Eine wesentliche Grundidee der vorliegenden Erfindung ist die Herstellung von Milchschaum: Hierzu kann die erfindungsgemäße Vorrichtung (beispielsweise integriert in deren Dampfableitungsabschnitt) einen Ansaugabschnitt, z.B. eine Ansaugleitung, aufweisen, über den/die als externe Flüssigkeit Milch angesaugt bzw. gefördert werden kann. Die angesaugte Milch wird dann z.B. durch eine geeignete Leitungsführung mit dem durch den Dampfableitungsabschnitt aus dem Flüssigkeitsbehälter abgeführten Dampf vermischt, wodurch die Milch aufgeschäumt wird. Die aufgeschäumte Milch kann dann an ein externes Behältnis (Tasse) abgegeben werden. Das Ansaugen der Milch kann dabei, wie nachfolgend noch näher beschrieben wird, über eine in den Dampfableitungsabschnitt integrierte Venturi-Düse realisiert werden. Alternativ dazu ist es jedoch auch möglich, ein Ansaugen der Milch z.B. über eine Pumpe zu realisieren, die in einen in den Dampfableitungsabschnitt führenden Ansaugabschnitt (Ansaugleitung) integriert ist.

Ein weiteres wesentliches Merkmal der vorliegenden Erfindung (das sowohl in Kombination mit der im vorangehenden Absatz beschriebenen Aufschäumeinheit realisiert werden kann, jedoch auch unabhängig davon in einer erfindungsgemäßen Vorrichtung realisiert sein kann) ist es, den Dampfdruck im Flüssigkeitsbehälter erst ab einem vordefinierten Mindest-Überdruck zu nutzen: Durch das Erhitzen der Flüssigkeit lässt sich ein Überdruck im Flüssigkeitsbehälter so herstellen (der dann zum vorbeschriebenen Durchdrücken der Flüssigkeit durch den Durchströmabschnitt genutzt wird), dass erst bei Erreichen eines vordefinierten Mindest-Überdrucks (von z.B. 0.5 bar) im Inneren des Flüssigkeitsbehälters gegenüber der Umgebung außerhalb des Flüssigkeitsbehälters ein Aufsteigen der Flüssigkeit und ein Durchströmen des Durchströmabschnittes ermöglicht wird. Wird dann (wie nachfolgend noch näher beschrieben) vom Kaffeepfad durch den Durchströmabschnitt und dessen Auslassabschnitt auf den Dampfpfad durch den Dampfableitungsabschnitt (zum Erzeugen von Milchschaum) umgeschaltet, so stellt dieser Mindest-Überdruck sicher, dass nur ein zum Erzeugen eines hochqualitativen Milchschaums ausreichender Mindestdruck durch den Dampfableitungsabschnitt bzw. zum Erzeugen von Milchschaum genutzt werden kann. Wie nachfolgend beschrieben kann diese Funktion beispielsweise durch eine Drossel realisiert werden.

Besonders bevorzugt ist es, die beiden vorgenannten wesentlichen Merkmale in Kombination miteinander zu verwirklichen: Der Ansaugabschnitt kann hierzu in den Dampfableitungsabschnitt integriert werden. Die erfindungsgemäße Vorrichtung wird dann des weiteren so ausgebildet, dass erst bei Erreichen des vordefinierten Mindestüberdrucks ein Ansaugen der externen Flüssigkeit (Milch) über diesen Ansaugabschnitt möglich ist. Letzteres wird bevorzugt dadurch realisiert, dass in den Dampfableitungsabschnitt ein Ventil integriert wird, das erst beim Überschreiten des vordefinierten Mindest-Überdrucks öffnet. Bei einem solchen Ventil kann es sich insbesondere um ein bistabiles Ventil handeln, das heißt ein Ventil, das nur zwei Zustände kennt: Vollständig geöffnet und vollständig geschlossen (digitales Schaltverhalten, das heißt, ein solches Ventil öffnet sehr schnell vollständig und schließt sehr schnell vollständig, ohne eine merkliche zeitliche Öffnungscharakteristik aufzuweisen).

Zum aktiven Öffnen und Verschließen der Flüssigkeitsführung (also des Durchströmabschnitts und/oder des Steigrohrabschnitts), die nachfolgend auch alternativ als Flüssigkeits- oder Kaffeepfad bezeichnet wird, eignet sich insbesondere ein erstes Öffnungs- und Schließmittel in Form eines in den Flüssigkeitspfad integrierten Ventils. Ebenso kann der Dampfableitungsabschnitt (nachfolgend auch als Dampfpfad bezeichnet) durch ein zweites Öffnungs- und Schließmittel in Form eines Ventils aktiv geöffnet werden bzw. verschlossen werden.

Eine erfindungsgemäße Möglichkeit ist nun, das erste Öffnungs- und Schließmittel bzw. das erste Ventil so auszubilden, dass erst ab dem vorbeschriebenen vordefinierten Mindest-Überdruck Flüssigkeit durch den Flüssigkeitspfad (als über den Weg Flüssigkeitsbehälter, Steigrohrabschnitt, Einlass, Durchflussvolumen und Auslassabschnitt) geführt wird. Hierzu kann ein Arbeitsventil nach dem Prinzip eines 2/2-Wegeventils dienen.

Alternativ dazu ist es jedoch auch möglich, diesen Mindest-Überdruck dadurch zu realisieren, dass im Durchströmabschnitt (und/oder auch im Steigrohrabschnitt) eine Drosseleinrichtung vorgesehen ist. Bei einer solchen Drosseleinrichtung handelt es sich im einfachsten Fall um eine den Durchflussquerschnitt verringernde Engstelle die so ausgebildet ist, dass erst ab dem vordefinierten Mindest-Überdruck eine Flüssigkeitsführung möglich ist. Besonders vorteilhaft kann eine solche Drosseleinrichtung im Auslassabschnitt des Durchströmabschnitts, z.B. in einem die Flüssigkeit in ein separates Behältnis (Tasse) ableitenden Schlauch integriert werden.

Wie bereits angedeutet, weist der Dampfableitungsabschnitt (z.B. die aus dem Dampfvolumen des Flüssigkeitsbehältnisses führende Rohrleitung) zum Aufschäumen in einer weiteren vorteilhaften Ausgestaltungsvariante eine Venturidüse auf. Letztere umfasst drei Abschnitte: einen stromaufwärts gelegenen, mit dem Flüssigkeitsbehälter in Verbindung stehenden Zuleitungsabschnitt, einen stromabwärts liegenden Ableitungsabschnitt, der in die Tasse führt und, im Bereich der Engstelle beim Übergang vom Zuleitungs- zum Ableitungsabschnitt, einen in diese Engstelle führenden Ansaugabschnitt. Gemäß dem dem Fachmann bekannten Venturiprinzip kann, z.B. durch Eintauchen des Ansaugabschnitts in einen separaten Behälter, der mit einer externen Flüssigkeit (z.B. Milch) gefüllt ist, diese externe Flüssigkeit durch den in der Venturidüse entstehenden statischen Unterdruck angesaugt werden, mit dem über den Zuleitungsabschnitt aus dem Flüssigkeitsbehälter zugeführten Flüssigkeitsdampf vermischt werden und über den Ableitungsabschnitt der Venturidüse bzw. des Dampfableitungsabschnittes dem externen Gefäß (Tasse) zugegeben werden.

Darüber hinaus kann im Flüssigkeitspfad auf der Durchflussvolumen-abgewandten Seite des Durchströmabschnitts ein Auslasskopf (z.B. Schäumkopf) ausgebildet sein, mittels dessen die aufsteigende, durch den Steigrohr- und den Durchströmabschnitt geführte Flüssigkeit an das externe Gefäß abgegeben werden kann. Ein solcher Auslasskopf kann in einer bevorzugten Variante so ausgebildet sein, dass er ebenfalls den Ausleitungsabschnitt des Dampfableitungsabschnitts und/oder der Venturidüse umfasst.

In einer vorteilhaften Variante handelt es sich beim zweiten Öffnungs- und Schließmittel bzw. zweiten Ventil (das den Dampfableitungsabschnitt hinsichtlich seines Öffnungs- oder Schließgrades regelt) um ein Mehrwege-Ventil, das beim Überschreiten eines vordefinierten Öffnungsdrucks öffnet und bei Unterschreiten dieses Drucks schließt. Dieser Druck liegt bevorzugt im Bereich zischen 0.2 bar und 4 bar, insbesondere im Bereich zischen 0.5 bar und 3 bar. Alternativ dazu kann jedoch auch ein manuell regelbares Ventil eingesetzt werden. Auch können beide Ventile hintereinander eingesetzt werden, wobei in Strömungsrichtung gesehen zunächst das Mehrwege-Ventil ausgebildet ist (eine Venturidüse kann dann wie vorbeschrieben in Strömungsrichtung gesehen nach dem zweiten Öffnungsund Schließmittel angeordnet werden). Durch letztere Variante kann insbesondere sichergestellt werden, dass der Dampfpfad bzw. Dampfableitungsabschnitt immer nur bei einem bestimmten Mindestdruck geöffnet werden kann.

In einer besonders vorteilhaften Variante weist die erfindungsgemäße Vorrichtung einen verschließbaren Zuleitungsabschnitt auf, mit dem dem Flüssigkeitsbehälter bzw. dessen Inneren die zu erhitzende Flüssigkeit zuführbar ist, ohne dass ein Auseinanderschrauben von Gehäuseteilen nötig ist. Dieser Zuleitungsabschnitt ist dabei so ausgebildet, dass zumindest ein Teil des Steigrohrabschnitts und zumindest ein Teil des Dampfableitungsabschnitts innerhalb eines freien Öffnungsquerschnitts (also z.B. innerhalb des Querschnitts eines vom Zuleitungsabschnitt umfassten Rohres) des Zuleitungsabschnitts geführt sind.

Die vorbeschriebene Variante kann insbesondere so realisiert werden, dass der Zuleitungsabschnitt in einem unteren Gehäuseabschnitt der Vorrichtung ausgebildet ist, in dem sich auch der Flüssigkeitsbehälter befindet. Im Inneren des Zuleitungsabschnitts bzw. innerhalb dessen Öffnungsquerschnitts ist dann ein unterer Teil des Steigrohrabschnitts sowie ggf. auch ein unterer Teil des Dampfableitungsabschnitts ausgebildet. Die Vorrichtung umfasst dann des Weiteren einen zweiten, oberen Gehäuseabschnitt, der mit dem unteren Gehäuseabschnitt druckdicht verbunden werden kann. Eine solche druckdichte Verbindung kann beispielsweise dadurch realisiert werden, dass der obere und der untere Gehäuseabschnitt miteinander verschraubt werden. Alternativ dazu ist es jedoch zum Beispiel auch möglich den oberen,Gehäuseabschnitt mittels eines Scharniers am unteren Gehäuseabschnitt zu befestigen, so dass der obere Gehäuseabschnitt (zu-)klappbar am unteren Gehäuseabschnitt befestigt ist. Durch Schließen des Scharniers und eine geeignet ausgebildete Einrastvorrichtung kann dann eine druckdichte Verbindung zwischen dem oberen und dem unteren Gehäuseabschnitt sichergestellt werden.

Der obere Gehäuseabschnitt, in dem der Durchströmabschnitt mit seinem Einlass, Durchflussvolumen und Auslassabschnitt ausgebildet sein kann, weist in diesem Fall einen oberen Teil des Dampfableitungsabschnitts und einen oberen Teil des Steigrohrabschnitts auf. Diese beiden oberen Teile sind im oberen Gehäuseabschnitt so angeordnet, dass beim Zuklappen bzw. Verschrauben der beiden Gehäuseabschnitte eine passgenaue Verbindung des unteren und des oberen Teils des Steigrohrabschnittes sowie des unteren und des oberen Teils des Dampfableitungsabschnittes erfolgt.

Alternativ zum Vorbeschriebenen kann der Dampfableitungsabschnitt jedoch auch lediglich im oberen Gehäuseabschnitt ausgebildet sein. Dies ist ausreichend, da das in den Flüssigkeitsbehälter führende, untere Ende des Dampfableitungsabschnitts oberhalb des entsprechenden Endes des Steigrohrabschnittes anzuordnen ist.

Bei der vorbeschriebenen Variante des verschraubbaren oberen und unteren Gehäuseabschnitts kann der obere Gehäuseabschnitt dann wie im Stand der Technik einen Sammelbehälter zur Aufnahme der aus dem Auslassabschnitt abgeführten Flüssigkeit aufweisen.

Im vorbeschriebenen Fall (in den unteren Gehäuseabschnitt einschraubbarer oberer Gehäuseabschnitt) kann der Dampfableitungsabschnitt wie folgt auf einfache Art und Weise realisiert werden: In die obere Seite eines im Wesentlichen aus dem Flüssigkeitsbehälter bestehenden, z.B. zylinderförmigen unteren Gehäuseabschnitts wird eine Bohrung eingebracht. Ebenso wird in den Unterboden eines ebenfalls z.B. zylinderförmigen oberen Gehäuseabschnitts eine Bohrung eingebracht. Die Oberseite des unteren Gehäuseabschnitts und/oder der Unterboden des oberen Gehäuseabschnitts wird darüber hinaus mit einem randseitig umlaufenden Dichtungsring versehen, der beim Einschrauben des oberen Gehäuseabschnitts in den unteren Gehäuseabschnitt druckdicht zwischen die beiden Gehäuseabschnitte gepresst wird. Zwischen dem Unterboden des oberen Gehäuseabschnitts und der Oberseite des unteren Gehäuseabschnitts besteht dann (eine ausreichende Dicke des Dichtungsringes vorausgesetzt) ein ringförmig umlaufender, druckdichter Ringspalt, durch den aus dem oberen Bereich des Flüssigkeitsbehälterinneren Flüssigkeitsdampf der erhitzten Flüssigkeit in die stromabwärtsseitigen Teile des Dampfableitungsabschnitts abgeführt werden kann. Aufgrund der vorbeschriebenen Ausbildung des druckdichten Ringspaltes ist es dabei nicht notwendig, dass die beiden Bohrungen unmittelbar übereinander zu liegen kommen: Unterschiedlicher Kraftaufwand beim Zusammenschrauben der Gehäuseabschnitte und somit unterschiedliche Winkelstellungen der beiden Bohrungen werden somit problemlos kompensiert.

In weiteren Ausführungsformen kann die erfindungsgemäße Vorrichtung wie nachfolgend noch im Detail beschrieben wird, weitere Ableitungsabschnitte umfassen. Sie sind als Teil des Dampfableitungsabschnitts ausgebildet (z.B. indem sich der Dampfableitungsabschnitt unmittelbar nach dem Flüssigkeitsbehälter in mehrere parallel verlaufende ableitende Abschnitte bzw. Rohre verzweigt). Insbesondere können ein erster Sicherheits-Ableitungsabschnitt, ein zweiter Sicherheits-Ableitungsabschnitt und/oder ein z.B. der Vorwärmung eines externen Behälters (z.B. Tasse) dienender dritter Ableitungsabschnitt realisiert werden.

Darüber hinaus kann die Vorrichtung ein z.B. in einen Wandabschnitt des Flüssigkeitsbehälters oberhalb des zu erwartenden Flüssigkeitsfüllstandes in diesem Behälter eingebautes Sicherheitsventil aufweisen. Ein solches Sicherheitsventil sorgt dafür, dass der Druck im Flüssigkeitsbehälter einen vorbeschriebenen Maximaldruck nicht überschreitet, öffnet sich also zwangsweise bei Überschreiten des vorbeschriebenen Maximaldrucks. Das Sicherheitsventil kann durch ein einfaches Feder-Kugel-Ventil realisiert werden, vorteilhafterweise wird es jedoch in Form eines Schnellkochtopf-Sicherheitsventils ausgebildet.

Die erfindungsgemäße Vorrichtung kann so ausgebildet sein, dass (z.B. durch geeignete Verknüpfung des Zuständs des ersten Ventils mit dem Zustand des zweiten Ventils) nur entweder der Durchströmabschnitt und der Steigrohrabschnitt einerseits oder der Dampfableitungsabschnitt andererseits geöffnet sein kann. (Eine gleichzeitige Öffnung des Dampfpfades bzw. zumindest eines von mehreren parallelen Ableitungswegen desselben und des Flüssigkeits- bzw. Kaffeepfades ist dann nicht möglich.)

In einer weiteren vorteilhaften Variante ist die erfindungsgemäße Steigrohrmaschine durch das Fehlen jeglicher elektrischer und jeglicher elektromechanischer Bauteile gekennzeichnet, hat somit den Vorteil z.B. auch auf einem Benzinkocher oder Gaskocher betrieben werden zu können.

Gegenüber den aus dem Stand der Technik bekannten Vorrichtungen hat eine erfindungsgemäße Vorrichtung den Vorteil, dass die Zubereitungsmöglichkeiten für das Heißgetränk deutlich erweitert werden.

So sind insbesondere die folgenden zusätzlichen Funktionen möglich, wobei eine externe Heizquelle verwendet werden und die Bedienung rein mechanisch erfolgen kann (ohne Notwendigkeit eines elektrischen Anschlusses bzw. der Verwendung von elektrischen oder elektromechanischen Komponenten):
- Herstellung von Cappuccino: Erst Herstellung von Espresso (über den Flüssigkeitspfad) und anschließend Herstellung von Milchschaum (über den Dampfpfad). Wesentlich dabei ist, dass die erfindungsgemäße Vorrichtung hierzu die Milch extern ansaugen und mit dem mittels des Dampfableitungsabschnitts aus dem Flüssigkeitsbehälter entnommenen Dampf zusammenführen kann, wodurch es zu einem Aufschäumen der Milch kommt. Die vorliegende Erfindung gibt somit nicht einfach Dampf ab (z.B. an ein externes Gefäß), sondern integriert eine Aufschäumeinheit, die den Dampf aus dem Flüssigkeitsbehälter bereits im Vorrichtungsinneren mit der separat zugeführten bzw. angesaugten Milch zusammenführt, hierdurch die Milch aufschäumt und die schließlich den entsprechenden Milchschaum z.B. über einen Schäumkopf der Vorrichtung in die Tasse abgibt. Dies hat dann insbesondere auch den Vorteil, dass eine optimale Schaumerzeugung auf genau definierte Art und Weise und ohne Verschmutzungen (z.B. durch Herausspritzen von bereits in der Tasse befindlicher Flüssigkeit) möglich ist.
- Herstellung von Latte Macchiato: Herstellung von in dieser Reihenfolge Milch (über den Dampfpfad), Milchschaum (über den Dampfpfad) und Espresso (über den Flüssigkeitspfad).
- Tassenvorwärmung durch Einleiten von Dampf in eine leere Tasse.
- Zubereitung von Tee durch Auffüllen des Durchflussvolumens mit Tee statt mit Kaffee.

Darüber hinaus kann erfindungsgemäß der Durchströmabschnitt bzw. dessen Durchflussvolumen so ausgebildet werden, dass so genannte Kaffeepads verwendet werden können bzw. in das Durchflussvolumen eingesetzt werden können. Hierzu muss der lichte Durchmesser des Durchflussvolumens mittels z.B. eines geeigneten Einsatzes an den lichten Durchmesser der zu verwendenden Kaffeepads angepasst werden.

Bei der Verwendung einer externen Heizquelle (ohne den Einsatz jeglicher Elektronik) bietet die erfindungsgemäße Vorrichtung nach wie vor die Vorteile des in Figur 1 gezeigten Standes der Technik in Form insbesondere einer vergleichsweise günstigen Herstellung von Heißgetränken sowie der Verwendung (z.B. im Outdoorbereich) auch abseits von elektrischen Anschlüssen.

Alternativ dazu kann jedoch in einer erfindungsgemäßen Vorrichtung auch eine interne Heizquelle eingebaut werden, beispielsweise in Form einer Heizspirale, einem Edelstahlheizboden oder eines nach dem Kontaktprinzip beim schnurlosen Wasserkocher ausgebildeteten Heizelements (solche Heizquellen sind dem Fachmann aus dem Stand der Technik bekannt).

Schließlich kann eine erfindungsgemäße Vorrichtung in vielfältiger Design- und Funktionsvarianten realisiert werden.

Nachfolgend wird die vorliegende Erfindung nun anhand von zwei Ausführungsbeispielen näher beschrieben. Dazu zeigen:
- Figur 1: den bereits beschriebenen Stand der Technik;
- Figur 2: das grundlegende Funktionsprinzip der vorliegenden Erfindung und den grundlegenden Aufbau eines ersten Ausführungsbeispiels; und
- Figur 3: ein zweites Ausführungsbeispiel für eine erfindungsgemäße Vorrichtung.

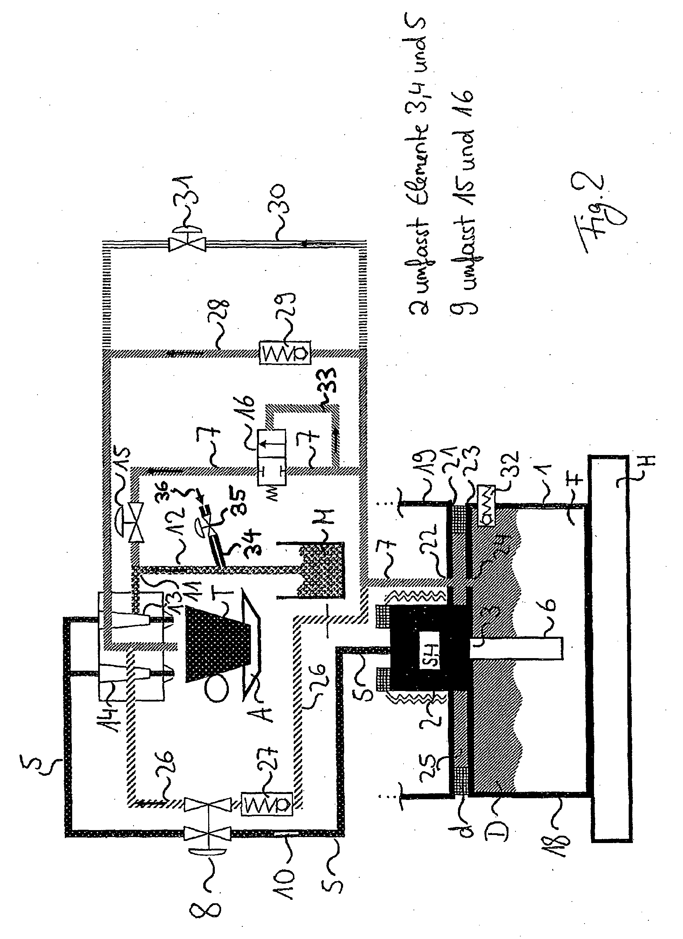

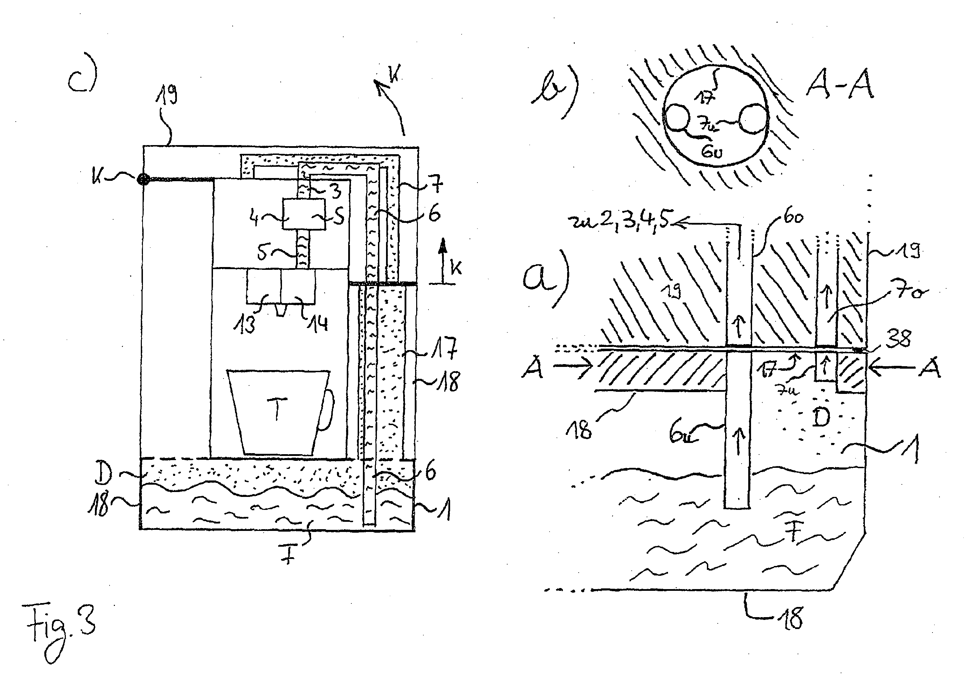

Figur 2 skizziert den grundlegenden Aufbau sowie die grundlegende Funktionsweise einer erfindungsgemäßen Vorrichtung. Die wesentlichen Merkmale der vorliegenden Erfindung werden dabei im Rahmen des in Figur 2 gezeigten ersten Ausführungsbeispiels beschrieben, können jedoch durch geringfügige, dem Fachmann aus den Figuren 2 und 3 sofort offensichtliche Modifikationen ebenso im Rahmen des zweiten Ausführungsbeispiels gemäß Figur 3 ausgebildet werden. Das erste Ausführungsbeispiel bezieht sich hierbei auf die in Figur 1 gezeigte Basisbauweise eines unteren Gehäuseabschnitts mit einsetzbarem Steigrohr sowie Durchflussvolumen und eines in den unteren Gehäuseabschnitt einschraubbaren oberen Gehäuseabschnitts. Figur 3 zeigt eine Abwandlung dieses Prinzips, bei dem der obere Gehäuseabschnitt klappbar mit dem unteren Gehäuseabschnitt verbunden ist.

Die in Figur 2 gezeigte erfindungsgemäße Vorrichtung weist einen unteren Gehäuseabschnitt 18 auf, der hier in Form eines flachen Hohlzylinders ausgebildet ist. Das Innere dieses Gehäuseabschnitts 18 ist der Flüssigkeitsbehälter 1, der hier zu ca. zwei Drittel (bei auseinander geschraubtem unteren und oberen Gehäuseabschnitt 18, 19) mit Wasser F befüllt wurde. Der Boden des Gehäuseabschnitts 18 ist aus hitzebeständigem Metall ausgebildet, so dass der untere Gehäuseabschnitt 18 auf eine externe Hitzequelle H in Form eines Elektroherdes aufgestellt werden kann. Durch eine geeignet in der Oberseite des unteren Gehäuseabschnitts 18 ausgebildete Öffnung ist der mit dem Steigrohrabschnitt 6 verbundene Durchströmungsabschnitt 2 (ähnlich wie beim Stand der Technik, vergleiche Figur 1) in den unteren Gehäuseabschnitt 18 einsetzbar. Nach dem Einsetzen ragt das untere Ende des Steigrohrabschnitts 6 in den flüssigkeitsgefüllten Bereich F des Flüssigkeitsbehälters 1. Der Durchströmabschnitt 2 umfasst im eingesetzten Zustand (von unten nach oben) einen sich dem Steigrohrabschnitt 6 anschließenden, ein unteres Sieb aufweisenden Einlass 3, das mit Kaffee S befüllbare Durchflussvolumen 4 sowie den das obere Sieb (hier wie das untere Sieb nicht gezeigt) sowie einen in das separate Behältnis (Tasse T) führenden Ableitungsschlauch aufweisenden Auslassabschnitt 5.

Ganz wie beim Stand der Technik wird somit beim Erhitzen der Flüssigkeit F oberhalb des Flüssigkeitsspiegels im Flüssigkeitsbehälter 1 ein mit Flüssigkeitsdampf D gefülltes, unter Überdruck stehendes Dampfvolumen ausgebildet, dessen Überdruck dazu führt, dass Flüssigkeit entgegen der Schwerkraft durch den Steigrohrabschnitt 6, den damit verbundenen Einlass, das mit dem Einlass verbundene Durchflussvolumen und den mit dem Durchflussvolumen verbundenen Auslassabschnitt 5 in die Tasse T fließt.

Aus Sicherheitsgründen ist in einen oben liegenden Wandabschnitt (im Bereich des Dampfvolumens D) des Flüssigkeitsbehälters 1 ein Sicherheitsventil 32 integriert. Dieses ist hier als einfaches Feder-Kugel-Ventil ausgebildet, kann jedoch auch als entsprechend eines Sicherheitsventils in einem Schnellkochtopf ausgebildet sein.

Erfindungsgemäß ist der die Elemente 24, 25 und 22 (sowie weitere Elemente, siehe nachfolgend) umfassende Dampfableitungsabschnitt 7 wie folgt ausgebildet: In die obere Zylinderdeckelfläche 23 des Flüssigkeitsbehälters 1 ist eine Öffnung in Form einer Bohrung 24 eingebracht. Die Vorrichtung weist neben dem hier zylinderförmigen unteren Gehäuseabschnitt 18 einen oberen Gehäuseabschnitt 19 auf, der (hier nicht im Detail gezeigt) ähnlich wie bei der in Figur 1 gezeigten Vorrichtung gemäß des Standes der Technik mit einem Außengewinde auf den ein Innengewinde aufweisenden unteren Gehäuseabschnitt 18 aufgeschraubt werden kann. Die untere Bodenfläche 21 des oberen Gehäuseabschnitts 19 (der im unteren Bereich ebenfalls zylinderförmig und mit gleichem Durchmesser wie der untere Gehäuseabschnitt 18 ausgebildet ist) wird beim Aufschrauben auf den unteren Gehäuseabschnitt 18 aufgrund einer auf der Oberseite 23 des Gehäuseabschnitts 18 ringförmig umlaufend aufgeklebten Dichtung d abdichtend mit dem unteren Gehäuseabschnitt 18 verpresst.

Zwischen der Oberfläche 23 des Gehäuseabschnitts 18 und dem Unterboden 21 des Gehäuseabschnitts 19 entsteht durch den umlaufenden Dichtring d somit ein umlaufender, druckdichter Ringspalt 25, in den die Bohrung 24 von unten her führt.

Der Unterboden 21 des Gehäuseabschnitts 19 weist nun ebenfalls eine Bohrung 22 mit gleichem Durchmesser wie die Bohrung 24 auf. Druckdicht mit dieser Bohrung verbunden ist ein sich wie nachfolgend verzweigendes Schlauch- oder Rohrsystem ausgebildet, das den eigentlichen Dampfableitungsabschnitt 7 darstellt.

Der Flüssigkeits- bzw. Kaffeepfad 6, 3, 4, 5, einerseits und der sich wie nachfolgend noch näher beschrieben in vier parallele Pfade 7, 26, 28 und 30 verzweigenden Dampfpfad andererseits sind somit vollständig voneinander getrennt, laufen jedoch wie nachfolgend noch näher beschrieben in einem gemeinsamen Auslasskopf 14 (Schäumkopf) so zusammen, dass die einzelnen Bestandteile des Heißgetränks (siehe nachfolgend) zeitlich parallel und/oder zeitlich nacheinander in ein und dasselbe externe Gefäß T eingeleitet werden können. Eventuell aus dem Gefäß T überlaufende Flüssigkeit wird durch eine Auffangvorrichtung A aufgefangen.

Zur Notation der vier parallel verlaufenden Leitungsabschnitte des Auslassabschnitts 7 sei angemerkt, dass die drei erfindungsgemäß optional vorsehbaren Leitungsabschnitte 26, 28 und 30 mit separaten Bezugszeichen versehen sind, während der für die vorliegende Erfindung wesentliche stromabwärtige Rohrabschnitt des Dampfableitungsabschnitts hier ebenfalls das Bezugszeichen 7 trägt (und nachfolgend zum Teil auch als "der" eigentliche Dampfpfad bezeichnet ist).

Der Auslassabschnitt 5 bzw. der Flüssigkeitspfad weist stromabwärts des Durchflussvolumens 4 zunächst eine Drosseleinrichtung 10 auf. Diese Drosseleinrichtung 10 ist hier durch eine Schlauchklemme realisiert, die den Durchströmungsquerschnitt eines Schlauchs des Auslassabschnitts 5 herabsetzt. Die Drosseleinrichtung 10 ist durch geeignete mechanische Ausbildung der Klemme so ausgeführt, dass erst dann Flüssigkeit gemäß des Steigrohrprinzips durch die Elemente 6, 3, 4 und 5 in die Tasse T fließen kann, wenn ein vordefinierter Mindest-Überdruck im Flüssigkeitsbehälter 1 bzw. im Dampfvolumen D herrscht. Dieser Mindest-Überdruck beträgt hier zwischen 1 mbar und 200 mbar. Der Mindest-Überdruck ist dabei derjenige Druck, um den der Druck im Flüssigkeitsbehälter 1 höher ist, als der Umgebungsdruck außerhalb der Vorrichtung.

Stromabwärts der Drosseleinrichtung 10 weist der Auslassabschnitt 5 ein erstes Öffnungs- und Schließmittel 8 in Form eines mechanischen Ventils auf. Dieses Ventil 8 kann per Hand vom Bediener der Vorrichtung geöffnet werden, um ein Ausleiten von Flüssigkeit in die Tasse T zu ermöglichen. Stromabwärts des Ventils 8 schließt sich ein im Schäumkopf 14 angeordneter Ausflussbereich des Auslassabschnitts 5 an, der in die Tasse T führt.

Nachfolgend werden die Funktionsweise und der Aufbau des Dampfableitungsabschnittes 7 beschrieben.

(Dampf-)Stromabwärts der beiden Bohrungen 24 und 22 verzweigt sich der Dampfableitungsabschnitt 7 in insgesamt vier getrennte Dampfpfade, den ersten Sicherheits-Ableitungsabschnitt 26, den zweiten Sicherheits-Ableitungsabschnitt 28, den dritten Ableitungsabschnitt 30 sowie den eigentlich erfindungswesentlichen stromabwärtigen Teil des Dampfableitungsabschnitts, der hier ebenfalls mit dem Bezugszeichen 7 bezeichnet ist.

Der letztere, eigentlich erfindungswesentliche stromabwärtige Teil des Dampfableitungsabschnitts 7 weist stromabwärts der Verzweigungsstelle ein über eine Vordruckleitung 33 angesteuertes 2/2-Wegeventil 16 auf. Durch die Vordruckleitung 33 ist dieses Ventil 16 so ausgebildet, dass es erst beim Überschreiten eines vordefinierten Öffnungsvordrucks, der in der Regel so gewählt wird, dass er dem vorbeschriebenen Mindest-Überdruck entspricht, öffnet und beim Unterschreiten dieses vordefinierten Öffnungsvordrucks - hier ist der Öffnungsvordruck somit gleich dem Schließvordruck - wieder schließt. Stromabwärts des Ventils 16 ist im eigentlichen Dampfableitungsabschnitt 7 ein manuell regelbares Ventil 15 ausgebildet. Das 2/2-Wegeventil 16 öffnet vollständig, sobald der vorbeschriebene minimale Vordruck bzw. Öffnungsdruck erreicht ist und schließt unterhalb dieses Öffnungsdrucks. Das Ventil 16 ist hier als bistabiles Ventil (d.h. es weist nur zwei Zustände auf: vollständig offen und vollständig geschlossen) ohne eine merkliche zeitliche Öffnungs- und Schließcharakteristik ausgebildet. Wird somit das Ventil 15 betätigt, bevor der Öffnungsdruck des Ventils 16 erreicht ist, findet kein Dampffluss statt. Erst nach Öffnung beider Ventile 16 und 15 kann Flüssigkeitsdampf D über den erfindungswesentlichen Dampfableitungsabschnitt 7 durch die sich dem manuellen Ventil 15 anschließende Venturidüse 11 (siehe nachfolgend) und den im Auslasskopf 14 angeordneten Venturidüsen-Auslass 13 in die Tasse T strömen bzw. kann mit Hilfe dieses Dampfes über die Venturidüse 11 Milch aufgeschäumt werden (siehe unten). Das zweite Öffnungs- und Schließmittel 9 umfasst hier also die Ventile 15 und 16. Die Ventile 8 und 15 sind hier miteinander so kombiniert, dass immer nur eines dieser Ventile geöffnet werden kann, niemals beide gleichzeitig.

Die vorbeschriebene Konfiguration hat auch den Vorteil, das sämtliche Steuerungs- und Regelfunktionen mechanisch realisiert sind, dass also z.B. keine Manometer benötigt werden.
Auf Basis der Venturidüse 11 im Dampfableitungsabschnitt 7 ist erfindungsgemäß ein Milchschäumer wie folgt realisiert: Der dem Flüssigkeitsbehälter 1 entstammende Flüssigkeitsdampf D fließt auf der Auslassseite des Ventils 15 in den Einlass der Venturidüse 11. Die Venturidüse 11 weist, wie dem Fachmann bekannt ist, zwischen ihrem Auslass 13 und ihrem Einlass eine Engstelle auf, auf deren Höhe ein Ansaugabschnitt in Form einer Ansaugleitung 12 in den Kanal zwischen Venturidüsen-Einlass und Venturidüsen-Auslass mündet.

Aufgrund des statischen Unterdrucks durch die Verengung kann mittels des durch den Dampfableitungsabschnitt 7 durchströmenden Dampfes D nach dem Venturiprinzip in einen separaten Behälter eingefüllte Flüssigkeit (Milch M) in die Venturidüse 11 gesaugt, mit dem durch deren Einlass zugeführten Dampf D vermischt und in Form dieser Mischung (also als Milchschaum) über den Venturidüsen-Auslass 13 bzw. den Schäumkopf 14 in die Tasse T geleitet werden.

Hierzu mündet ein weiterer Leitungsabschnitt 34 in den Ansaugabschnitt 12 zwischen Venturidüse 11 und Milchbehälter. In diesem Abschnitt 34 ist ein manuell regelbares Ventil 35 ausgebildet. Wird dieses Ventil 35 geschlossen (d.h. erfolgt keine Luftansaugung 36 durch den Leitungsabschnitt 34 gemäß des Venturiprinzips), so wird durch das Venturiprinzip Milch M über die Ansaugleitung 12 in den eigentlichen Dampfableitungsabschnitt 7 gefördert. Ist das Ventil 35 offen, so wird 36 Luft in die Leitung 34 gesaugt.

Aus Sicherheitsgründen verzweigt sich der unmittelbar auf die Bohrung 22 folgende, stromaufwärtsseitige Teil des Dampfableitungsabschnitts 7 in zwei weitere, parallel zum erfindungswesentlichen unteren Teil 7 des Dampfableitungsabschnitts verlaufende Dampfpfade 26 und 28:
Der erste Sicherheits-Ableitungsabschnitt 26 umfasst in Strömungsrichtung zunächst ein Druckventil 27, dann ein mit dem ersten Öffnungs- und Schließmittel 8 gekoppeltes Ventil 37 und mündet schließlich ebenfalls und in Form eines separaten Ausleitungsabschnittes in den Schäumkopf 14. Der vorbeschriebene Sicherheitspfad 26 wird alternativ auch als BypassPfad bezeichnet und nachfolgend noch näher beschrieben.

Der zweite Sicherheits-Ableitungsabschnitt 28, in den sich der stromaufwärtige Teil des Dampfableitungsabschnitts 7 verzweigt, weist in Strömungsrichtung gesehen ebenfalls ein Sicherheitsventil 29 auf. Dieses Sicherheitsventil 29 ist ebenso wie das Sicherheitsventil 27 als einfaches Feder-Kugel-Ventil ausgebildet, das nach Überschreiten eines vordefinierten Drucks automatisch öffnet. Auch der zweite Sicherheitspfad 28 mündet in den Schäumkopf 14 und wird nachfolgend noch näher beschrieben.

Schließlich verzweigt der Dampfableitungsabschnitt 7 in einen weiteren parallelen Pfad, den dritten Ableitungsabschnitt 30, in dem ein manuell regelbares Ventil 31 ausgebildet ist.

Alle drei Pfade 26, 28 und 30 münden nach ihren jeweils parallel zueinander verlaufenden Abschnitten in einen gemeinsamen Auslassabschnitt (der hier ebenfalls im Auslasskopf 14 ausgebildet ist), über den jeweils Druck in die Umgebung der Vorrichtung abgelassen werden kann.
Wie vorbeschrieben kann erfindungsgemäß über den druckdichten d Ringspalt 25 aus dem Dampfvolumen des Flüssigkeitsbehälters 1 Flüssigkeitsdampf D für weitere Funktionen in die Dampfpfade 7, 26, 28 und 30 geleitet werden. Dies ist unabhängig von der relativen Stellung der beiden Bohrungen 22 und 24 bzw. unabhängig vom exakten Drehwinkel von Oberteil 19 zu Unterteil 18 möglich.

Eine wesentliche Funktionserweiterung gegenüber dem Stand der Technik stellt dabei das Herstellen von Milchschaum über die Venturidüse 11 dar: Bei geschlossenem Flüssigkeitspfad bzw. Auslassabschnitt 5 kann dem Dampfvolumen D im Behälter 1 Flüssigkeitsdampf entnommen werden, mit dem dann die Milch M aufgeschäumt und über den Schäumkopf 14 der Tasse T zugegeben wird. Die Ventilsteuerung 16, 33 ist dabei so ausgebildet, dass der untere Dampfpfadabschnitt 7 erst bei Erreichen eines Mindestdrucks im Bereich größer gleich 0,5 bar, bevorzugt zwischen 0,8 und 1 bar, geöffnet wird. Hierzu ist erfindungswesentlich die Drosseleinrichtung 10 vorgesehen, die den Aufbau eines ausreichenden Vordrucks im Flüssigkeitsbehälter 1 ermöglicht: Ohne die Drosseleinrichtung 10 fließt (bei geöffnetem Ventil 8) Flüssigkeit bereits bei Erreichen von weniger als 100 mbar durch den Flüssigkeitspfad 5 in die Tasse T, so dass (nach Schließen des Ventils 8) kein ausreichender Vordruck besteht, um ein qualitativ hochwertiges Aufschäumen von Milch über den Pfad 7, 11 zu ermöglichen.

Das Durchflussvolumen 4 dient, analog zu Maschinen aus dem Stand der Technik, zur Aufnahme von Kaffeepulver (oder auch Tee). Dieses Durchflussvolumen kann so ausgelegt sein, dass handelsübliche Kaffeepads verwendbar sind. Dies kann beispielsweise mittels eines Adapters oder eines Wechseleinsatzes anstatt des herkömmlichen Behälters für das Kaffeepulver bzw. durch Auslegung des Kaffeevolumens so, dass dieses direkt zur Aufnahme von Kaffeepads dient, realisiert werden.

### Zubereitung des Kaffees (Flüssigkeitspfad 5):

Wie im Stand der Technik wird über das Steigrohr 6 Wasser durch das Kaffeevolumen 4 gedrückt. Die Drosseleinrichtung 10 dient zur Erzeugung eines ausreichenden Vordrucks, um beim (nachfolgenden) Öffnen des Dampfpfads 7 die Wartezeit bis zum Erreichen des Schäumdrucks zu verringern und einen ausreichenden Schäumdruck für die Milch M zu gewährleisten. Ein zu geringer Schäumdruck führt zu verminderter Qualität des Milchschaums. Optimal ist ein Schäumdruck oberhalb etwa 0,8 bar und unterhalb von ca. 1,5 bar.

Durch Öffnen des Ventils 8 fließt Kaffee in den Schäumkopf 14 und gelangt in die Tasse T. Bei einer Ausführungsvariante kann das Ventil 8 als Schließer ausgebildet sein, das heißt in unbetätigtem Ventilzustand ist der Kaffeepfad 5 geöffnet. In Kombination mit dem Ventil 15 wird dann beispielsweise der Kaffeepfad 5 geschlossen und gleichzeitig der eigentliche Dampfpfad 7 geöffnet.

Der zusätzlich angebrachte Bypass (Dampfpfad 26) verhindert bei geöffnetem Kaffeepfad 5 eine zu hohe Kaffeewassertemperatur (z.B. bei zu stark eingestellter Hitzequelle H) dadurch, dass das Druckventil 27 bei Überschreiten eines vorher festgelegten Drucks (z.B. 3 bar) geöffnet wird. Beim Betätigen zum Schließen des Kaffeeventils 8 (Schließer) wird durch eine Kopplung des Ventils 8 mit einem Ventil 37 im Sicherheitspfad 26 gleichzeitig der Bypass durch das Ventil 37 (das ebenfalls als Schließer ausgebildet sein kann) geschlossen.

Über die Drosseleinrichtung 10 wird erreicht, dass erst ein bestimmter Vordruck (z.B. 0,5 bar) aufgebaut wird, bevor Kaffee durch die Flüssigkeitsleitung 5 fließt. Dies hat den wesentlichen Vorteil, dass beim Umschalten (vom Kaffeepfad) auf Milchschaum (also dem Dampfpfad 7) die Differenz zum Schäumdruck klein bzw. 0 ist und damit nicht nur die Wartezeit bis zum Start des Schäumvorgangs minimiert wird, sondern gleichzeitig auch für eine optimale Qualität der aufgeschäumten Milch M gesorgt werden kann. Ohne die Verwendung der Drosseleinrichtung 10 würde der Kaffee bereits bei wenigen Millibar zu fließen beginnen, so dass die vorbeschriebene Wartezeit unter Umständen sehr lang ist und ggf. kein optimales Milchaufschäumen gewährleistet wird.

Konstruktiv kann die Drosseleinrichtung 10 als manuell verschließbare Drosselstelle realisiert werden (dies ist beispielsweise im Reinigungszyklus vorteilhaft). Hierzu kann eine Schlauchklemme verwendet werden oder ein Schlauch labyrinthartig in ein Halteelement eingelegt sein.

Wird das Kaffeevolumen 4 nicht mit Kaffee S, sondern mit Tee befüllt, so strömt heißes Wasser über den Flüssigkeitspfad 5 in die Tasse und ermöglicht somit die Zubereitung von Tee als Heißgetränk. Alternativ dazu kann das Durchflussvolumen 4 auch leer gelassen werden und z.B. ein Teebeutel in die Tasse T gelegt werden. Im letzteren Fall entspricht die Vorgehensweise dann dem Heißwasserauslauf bei elektrischen Kaffeemaschinen.

Zum Befüllen des Durchflussvolumens 4 muss wie bei den aus dem Stand der Technik bekannten Maschinen das Oberteil 19 vom Unterteil 18 durch ein Schraubgewinde (hier nicht gezeigt) getrennt werden. Eine alternative Ausgestaltungsform hierzu zeigt das zweite Ausführungsbeispiel in Figur 3 (siehe nachfolgend).

### Erzeugung von Milchschaum (eigentlicher Dampfableitungsabschnitt 7):

Zur Erzeugung von Milchschaum wird der eigentliche Dampfpfad 7 geöffnet. Dies geschieht durch das manuelle Ventil 15. Um zu verhindern, dass sich zu geringer Schaumdruck sofort wieder abbaut (und zu ungünstiger Schaumqualität führt) gibt es prinzipiell zwei Möglichkeiten:
1. Dem Benutzer der Vorrichtung wird der optimale (minimale) Schäumdruck signalisiert. Dies kann durch ein Manometer geschehen (hier nicht gezeigt). Der Benutzer kann anschließend das Ventil 15 manuell öffnen.
2. Durch Verwendung des hier zusätzlich vorgesehenen 2/2-Wegeventils 16 mit der Vordruckansteuerung 33 kann das einstellbare Ventil 16 vollständig geöffnet werden, sobald der minimale (Öffnungsdruck) erreicht ist. Das Ventil schließt dann bei einem (ggf. hysteresebehafteten Schließdruck). Wird das Ventil 15 betätigt, bevor der Öffnungsdruck des Ventils 16 erreicht ist, findet kein Dampffluss 7 statt. Erst nach Öffnung der beiden Ventile 15 und 16 kann Dampf durch die Ausflussöffnung 13 strömen. Die Aufschäumung der Milch M erfolgt wie vorbeschrieben mit den Komponenten 11, 12, 34, 35 und 36: Der Milchbehälter ist befüllt, das Luftansaugventil 35 ist geöffnet und der nach dem Venturiprinzip arbeitende Schäumer 11 saugt das LuftMilch-Gemisch an und schäumt dieses durch den über die Ventile 15 und 16 zugeführten Dampfstrom D zu Milchschaum auf.

Der Milchbehälter für die Milch M kann dabei als separater Milchbehälter (z.B. Tetrapak), als separater, auf einer Standfläche abstellbarer Behälter (z.B. Tasse) oder auch (hier nicht gezeigt) als Teil des oberen Gehäuseabschnitts 19 ausgeführt sein. In letzterem Fall kann der Milchbehälter als ausklappbarer Behälter, der zur Reinigung und zum Auffüllen entnehmbar ist und dessen Außenseite der Form des Oberteils entspricht, ausgebildet sein.

### Überdrucksicherung über den Dampfpfad 28:

Um zu hohen Systemdruck zu vermeiden, ist parallel zum eigentlichen erfindungswesentlichen Dampfpfad 7 ein Dampfpfad 28 vorhanden, der durch ein Überdruckventil 29 verschlossen ist. Dieses spricht unterhalb des Sicherheitsventils 32 des Behälters 1 an und baut zu hohen Systemdruck derart ab, das dieser Systemdruck über den Schäumkopf 14 abgeleitet wird. Alternativ kann dieser Druck innerhalb des Gehäuses 19 abgelassen werden. Dieser Pfad ist insbesondere für den Fall vorteilhaft, dass der Benutzer die Heizquelle bei darauf stehender Vorrichtung nicht abgestellt hat und dadurch weiter Energie zugeführt wird (oder wenn eine Funktionsstörung vorliegt).

### Tassenvorwärmung über den Dampfpfad 30:

Zur Verbesserung der Kaffeequalität wird an elektrischen Kaffeemaschinen eine so genannte Dampfdusche verwendet. Dieselbe Funktionalität ist hier bei der erfindungsgemäßen Vorrichtung durch den dritten Ableitungsabschnitt 30 realisiert. Hierzu wird der Kaffeepfad 5 geschlossen (Ventil 8), der eigentliche Dampfpfad 7 wird geschlossen (Ventil 15) und das Ventil 31 wird (bei einem Druck der noch unterhalb des Ansprechpunktes des Ventils 29 ist) geöffnet. In diesem Fall entweicht Dampf über den Pfad 31 in die Tasse T und wärmt diese entsprechend der Betätigungsdauer des Ventils 31 vor.

### Herstellung verschiedener Kaffeespezialitäten:

Erfindungsgemäß sind folgende Funktionen möglich:

| | ←------------------Funktion------------------------------------→ | | | | | | |
|---|---|---|---|---|---|---|---|
| | Tassen-Vorwärm. | Espresso | Cappuccino | | Latte Macchiato | | |
| | | | Espr | Milchs | Milch | Milchschaum | Espresso |
| Kaffeepfad | zu | auf | auf → | zu | zu → | zu → auf | |
| Milchpfad | keine Ansaug. | Keine Ansaug. | Ansaugung | | | Ansaugung | |
| Luftansaugung | n/a | n/a | auf | | zu → | auf → n/a | |
| Dampfpfad (Milchschaum) | zu | zu | zu → | auf | auf → | auf → zu | |
| Dampfpfad | auf | zu | zu | | zu | zu | zu |

Das in der vorstehenden Tabelle beschriebene Bedienkonzept ist somit derart ausgeführt, dass vier Funktionsstellungen vorhanden sind:

| | |
|---|---|
| Wahlstellung 0: | Espressofunktion |
| Wahlstellung 1: | Cappuccinofunktion |
| Wahlstellung 2: | Latte Macchiato-Funktion |
| Wahlstellung 3: | Tassenvorwärmfunktion. |

Bei der Wahlstellung 0 wird der Kaffeepfad 5 geöffnet, indem das Ventil 8 geöffnet wird. Kaffee wird bei Erreichen des Drosseldrucks der Drosseleinrichtung 10 in die Tasse T gefördert. Die Dampfpfade 7, 28 und 30 sowie der Bypasspfad 26 sind hier geschlossen. Dadurch ist keine Milchansaugung möglich.

In Wahlstellung 1 wird das Ventil 8 geschlossen (Kaffeepfad 5 geschlossen), gleichzeitig wird das Ventil 15 (ebenfalls: Ventil 16) geöffnet. Der eigentliche Dampfpfad 7 ist somit geöffnet; gleichzeitig sind die Sicherheitsdampfpfade 26 und 28 sowie der Pfad 30 geschlossen. Über die Elemente 11, 12, 34, 35 und 36 wird Milch M angesaugt.

In der Wahlstellung 2 muss für den Milchanteil nach dem Venturi-Prinzip über die Venturidüse 11 Milch M ohne Luftansaugung 36 durch den Dampfstrom im eigentlichen Dampfableitungsabschnitt 7 angesaugt werden. Dazu wird das Ventil 35 (Schließer) vom Bediener betätigt mit der Folge, dass nur Milch M über den Milchpfad 12 durch den Dampfstrom 7 angesaugt wird. Durch die im Dampf enthaltene Energiemenge wird die Milch entsprechend vorgewärmt. Das Ventil 8 ist hierbei geschlossen (Kaffeepfad 5 geschlossen), das Ventil 15 geöffnet. Das Ventil 35 geschlossen. Die Pfade 26, 28 und 30 sind geschlossen.

Wahlstellung 3 (Tassenvorwärmung): Das Ventil 8 wird geschlossen (Kaffeepfad 5 geschlossen), gleichzeitig wird der eigentlich erfindungswesentliche Dampfpfad 7 (über das Ventil 15) geschlossen. Auch die Pfade 26 und 28 sind geschlossen. Das Ventil 31 wird geöffnet, wodurch der Pfad 30 für den Dampf eröffnet ist.

### Auffangvolumen:

Als Überlaufsicherung (beispielsweise bei nicht beaufsichtigter Beheizung) dient ein unter der Tasse T angebrachtes Auffangvolumen A. Dieses Volumen kann als Teil der Vorrichtung ausgebildet sein, kann jedoch auch separat ausgebildet werden. Es ist vorzugsweise so dimensioniert, dass der maximale Inhalt des Wassers in dem Flüssigkeitsbehälter 1 aufgenommen werden kann.

### Reinigungskonzept:

Eine Reinigung des Kaffeepfades 5 ist dadurch möglich, dass kein Kaffeepulver in das Kaffeevolumen 4 eingefüllt wird. Stattdessen wird eine Reinigungstablette oder ein Reinigungspulver eingefüllt. Die Drosseleinrichtung 10 wird entfernt (Lösen einer Schlauchklemme o. ä.), Wasser wird in den Behälter 1 eingefüllt und die Heizquelle H wird betätigt. Der Kaffeepfad 5 wird durch aufsteigendes Wasser gereinigt.

Der Milchpfad 12 kann einfach dadurch gereinigt werden, dass Wasser angesaugt wird (Venturifunktion).

Figuren 3a bis 3c zeigen ein weiteres Ausführungsbeispiel für eine erfindungsgemäße Vorrichtung. Diese verwendet grundsätzlich die selben Einzelelemente wie sie im Rahmen des Ausführungsbeispiels von Figur 2 beschrieben sind, diese Einzelelemente sind jedoch in eine abweichende Gehäusekonstruktion 18, 19 integriert. Nachfolgend werden daher nur die Unterschiedsmerkmale zum Ausführungsbeispiel aus Figur 2 beschrieben.

Figur 3c zeigt eine Seitenansicht der erfindungsgemäßen Vorrichtung: Das Gehäuse der Vorrichtung besteht hier aus einem unteren Gehäuseabschnitt 18, in das der Flüssigkeitsbehälter 1 integriert ist, und aus einem oberen Gehäuseabschnitt 19, der über ein Scharnier K klappbar k mit dem unteren Gehäuseabschnitt 18 verbunden. In den oberen Gehäuseabschnitt 19 ist der Durchströmabschnitt mit seinem Einlass 3, seinem Durchflussvolumen 4 und dem Auslassabschnitt 5 integriert. Im vorliegenden Fall durchströmt die durch den Steigrohrabschnitt 6 aufsteigende Flüssigkeit das Durchflussvolumen 4 bzw. den Kaffee S von oben nach unten.

Figur 3a skizziert die Konstruktionsweise der erfindungsgemäßen Vorrichtung aus Figur 3c im Querschnitt: Der Steigrohrabschnitt 6 sowie der Dampfableitungsabschnitt 7 verlaufen in einer Seitenwand der beiden Gehäuseabschnitte 18, 19. Sowohl der Steigrohrabschnitt 6 als auch der Dampfableitungsabschnitt 7 ist zweigeteilt. Ein unterer Teil 6u des Steigrohrabschnitts 6 ist in der Seitenwand des unteren Gehäuseabschnitts 18 angeordnet, ein oberer Teil 6o des Steigrohrabschnitts 6 im oberen Gehäuseabschnitt 19. Entsprechendes gilt für die beiden Teile 7u (unterer Teil) und 7o (oberer Teil) des Dampfableitungsabschnitts). Das untere Ende des unteren Teils 6u des Steigrohrabschnitts ist dabei in Bodennähe des unteren Gehäuseabschnitts 18 so angeordnet, dass im Behältnis 1 vorhandene Flüssigkeit F nach dem vorbeschriebenen Steigrohrprinzip zum Aufsteigen gebracht werden kann. Der untere Einlass bzw. das untere Ende des unteren Teils 7u des Dampfableitungsabschnitts 7 ist oberhalb des unteren Einlasses des Teils 6u so angeordnet, dass wie vorbeschrieben Flüssigkeitsdampf D ableitbar ist.

Wie Figur 3b im Querschnitt A-A (vergleiche Figur 3a) zeigt, weist der untere Gehäuseabschnitt 18 einen verschließbaren Zuleitungsabschnitt 17 auf, mit dem im aufgeklappten Zustand (also bei Wegklappen k des oberen Gehäuseabschnitts 19 mittels des Scharniers K) dem Flüssigkeitsbehälter 1 Flüssigkeit F zugeführt werden kann. Hierzu ist der Zuleitungsabschnitt 17 als rundes Rohr ausgebildet, das von der Oberseite des unteren Gehäuseabschnitts 18 in den Flüssigkeitsbehälter 1 führt.

Die beiden unteren Teile 6u, 7u des Steigrohrabschnitts und des Dampfableitungsabschnitts sind innerhalb des lichten Öffnungsquerschnitts des Zuleitungsabschnitts bzw. Zuleitungsrohres 17, also innerhalb dieses Rohres geführt. Hierzu weist der Rohrdurchmesser des Zuleitungsrohrs 17 etwa den 4.5-fachen Wert der Rohrleitungsdurchmesser der unteren Teile 6u, 7u auf (Figur 3b). Die unteren Teile 6u, 7u sind an gegenüberliegenden Wandabschnitten des Zuleitungsabschnitts 17 befestigt. Wie das obere Ende des Zuleitungsabschnitts 17, so enden auch die oberen Enden der unteren Teile 6u, 7u an der Oberseite des unteren Gehäuseabschnitts 18.

Im in Figur 3a gezeigten, zugeklappten Zustand der beiden Gehäuseabschnitte 18, 19 ist der Zuleitungsabschnitt 17 durch die Unterseite des oberen Gehäuseabschnitts 18 fluiddicht verschlossen. Die Fluiddichtigkeit des Verschlusses wird durch eine an der Unterseite des oberen Gehäuseabschnitts 18 befestigte Dichtung 38 gewährleistet.

Wie Figur 3a zeigt, sind im oberen Gehäuseabschnitt 19 das obere Teil 6a des Steigrohrabschnitts 6 und das obere Teil 7o des Dampfableitungsabschnitts 7 ausgebildet. Der untere Einlass dieser beiden Oberteile 6o, 7o beginnt an der Unterseite des oberen Gehäuseabschnitts 19 und ist so angeordnet, dass im zugeklappten Zustand der beiden Gehäuseabschnitte 18, 19 aus den beiden Teilen 6u und 6o ein durch beide Gehäuseabschnitte 18, 19 führender, geschlossener Steigrohrabschnitt 6 entsteht. Ebenso entsteht durch den bündigen Abschluss des oberen Endes des unteren Teils 7u und des unteren Endes des oberen Teils 7o ein durch beide Gehäuseabschnitte 18, 19 führender, geschlossener Dampfableitungsabschnitt 7.

Wie im Ausführungsbeispiel von Figur 2 beschrieben, kann durch den geschlossenen Steigrohrabschnitt 6 Flüssigkeit F durch das Durchflussvolumen 4 und somit durch das Kaffeepulver S geführt werden. Die für das Ausführungsbeispiel von Figur 2 beschriebene Verzweigung des Dampfpfads in die vier einzelnen Pfade 7, 26, 28 und 30 kann im oberen Gehäuseabschnitt 19 ausgehend vom in Figur 3a gezeigten oberen Teil 7o integriert werden (hier nicht gezeigt).

## Patentansprüche

1. Vorrichtung nach dem Steigrohrprinzip für die Zubereitung eines Heißgetränks umfassend
einen Flüssigkeitsbehälter (1), in dem Flüssigkeit (F) mittels einer externen Heizquelle (H) erhitzbar ist und/oder dem erhitzte Flüssigkeit (F) zuführbar ist,
einen Durchströmabschnitt (2) mit einem Einlass (3) für erhitzte Flüssigkeit aus dem Flüssigkeitsbehälter, mit einem zur Aufnahme eines von dieser Flüssigkeit zu durchströmenden Stoffes (S) ausgebildeten Durchflussvolumen (4) und mit einem Auslassabschnitt (5) zum Abführen von durch das Durchflussvolumen durchgeströmter Flüssigkeit aus dem Durchflussvolumen,
einen Steigrohrabschnitt (6), der den Flüssigkeitsbehälter über den Einlass mit dem Durchflussvolumen verbindet,
einen mit dem Flüssigkeitsbehälter verbundenen Dampfableitungsabschnitt (7), mittels dessen von erhitzter Flüssigkeit (F) stammender Dampf (D) aus dem Flüssigkeitsbehälter abführbar ist, und einen in den Dampfableitungsabschnitt (7) integrierten Ansaugabschnitt (12), über den eine externe Flüssigkeit (M) ansaugbar ist,
wobei die angesaugte externe Flüssigkeit (M) mit dem aus dem Flüssigkeitsbehälter (1) abgeführten Dampf (D) zusammenführbar und aufschäumbar ist, **gekennzeichnet durch**
ein zum aktiven Öffnen und Verschließen des Durchströmabschnitts und/oder des Steigrohrabschnitts ausgebildetes erstes Öffnungs- und Schließmittel (8) und ein zum aktiven Öffnen und Verschließen des Dampfableitungsabschnitts (7) ausgebildetes zweites Öffnungs- und Schließmittel (9),
wobei das erste Öffnungs- und Schließmittel (8) und das zweite Öffnungs- und Schließmittel (9) unabhängig voneinander so ansteuerbar sind, dass die Vorrichtung zwischen dem Durchströmabschnitt und/oder dem Steigrohrabschnitt einerseits und dem Dampfableitungsabschnitt (7) andererseits umschaltbar ist.

2. Vorrichtung nach dem vorhergehenden Anspruch
**dadurch gekennzeichnet, dass**
das erste Öffnungs- und Schließmittel (8) so ausgebildet ist, dass mittels eines durch das Erhitzen von Flüssigkeit im Flüssigkeitsbehälter (1) hergestellten Überdrucks erst ab einem vordefinierten Mindest-Überdruck Flüssigkeit aus dem Flüssigkeitsbehälter (1) durch den Steigrohrabschnitt, den Einlass und das Durchflussvolumen drückbar und über den Auslassabschnitt abführbar ist.

3. Vorrichtung nach einem der vorhergehenden Ansprüchen
***dadurch gekennzeichnet, dass***
erst bei Erreichen eines/des vordefinierten Mindest-Überdrucks ein Ansaugen der externen Flüssigkeit (M) über den Ansaugabschnitt (12) ermöglicht ist, wobei letzteres bevorzugt dadurch realisiert ist, dass das zweite Öffnungs- und Schließmittel (9) ein in den Dampfableitungsabschnitt (7) integriertes Ventil umfasst, das erst beim Überschreiten des vordefinierten Mindest-Überdrucks öffnet.

4. Vorrichtung nach einem der vorhergehenden Ansprüche
***dadurch gekennzeichnet, dass***
das erste Öffnungs- und Schließmittel (8) ein Ventil ist,
und/oder
dass das zweite Öffnungs- und Schließmittel (9) ein Ventil ist.

5. Vorrichtung nach einem der vorhergehenden Ansprüche
***dadurch gekennzeichnet, dass***
der Durchströmabschnitt und/oder der Steigrohrabschnitt, insbesondere der Auslassabschnitt des Durchströmabschnitts, eine Einrichtung, bevorzugt eine Drosseleinrichtung (10), insbesondere eine den Durchflussquerschnitt verringernde Engstelle, aufweist, die so ausgebildet ist, dass erst ab dem vordefinierten Mindest-Überdruck Flüssigkeit aus dem Flüssigkeitsbehälter durch den Steigrohrabschnitt, den Einlass und das Durchflussvolumen drückbar und über den Auslassabschnitt abführbar ist
und/oder
dass der Mindest-Überdruck im Dampfableitungsabschnitt (7) zwischen 0.2 und 4 bar, insbesondere zwischen 0.5 bar und 3 bar beträgt.

6. Vorrichtung nach einem der vorhergehenden Ansprüche
***dadurch gekennzeichnet, dass***
der Dampfableitungsabschnitt (7) eine Venturidüse (11) umfasst, mittels derer durch einen/den Ansaugabschnitt (12) aufgrund des Venturieffekts eine/die externe Flüssigkeit (M) ansaugbar und mittels eines Venturidüsen-Auslasses (13) an ein externes Gefäß (T) abgebbar ist
und/oder
dass ein/der Ansaugabschnitt (12) eine Pumpe aufweist, mit der eine/die externe Flüssigkeit (M) ansaugbar und dem aus dem Flüssigkeitsbehälter (1) abgeführten Dampf (D) zum Aufschäumen zuführbar ist
und/oder
dass auf der durchflussvolumen-abgewandten Seite des Durchströmabschnitts (2) und in Durchflussrichtung gesehen am Ende des oder hinter dem Auslassabschnitt(s) (5) ein Auslasskopf (14) angeordnet ist, mittels dessen durch das Durchflussvolumen durchgeströmte Flüssigkeit an ein externes Gefäß (T) abgebbar ist,
wobei bevorzugt der Venturidüsen-Auslass (13) als Teil des Auslasskopfes (14) und/oder integriert mit dem Auslasskopf (14) ausgebildet ist.

7. Vorrichtung nach einem der vorhergehenden Ansprüche
***dadurch gekennzeichnet, dass***
das zweite Öffnungs- und Schließmittel (9) und/oder der Dampfableitungsabschnitt (7) ein manuell steuerbares Ventil (15) und/oder ein Ventil (16), bevorzugt ein Mehrwege-Ventil (16), insbesondere ein 2/2-Wegeventil, wobei das Ventil (16) beim Überschreiten eines vordefinierten Öffnungsvordrucks, der bevorzugt dem vordefinierten Mindest-Überdruck entspricht, öffnet, bevorzugt vollständig öffnet, und bei Unterschreiten eines vordefinierten Schließvordrucks, der bevorzugt identisch dem Öffnungsvordruck ist, schließt, bevorzugt vollständig schließt, umfasst/umfassen,
wobei bevorzugt sowohl ein manuell steuerbares Ventil (15), als auch ein in Strömungsrichtung vor letzterem angeordnetes Ventil (16) vorgesehen ist,
und/oder
wobei bevorzugt die Venturidüse (11) in Strömungsrichtung gesehen nach dem zweiten Öffnungsund Schließmittel (9) angeordnet ist.

8. Vorrichtung nach einem der vorhergehenden Ansprüche
***gekennzeichnet durch***
eine Ausbildung, insbesondere eine Ausbildung des ersten und des zweiten Öffnungs- und Schließmittels (8, 9) so, dass nur entweder ein erster Ausleitungsabschnitt umfassend den Durchströmabschnitt (2) und den Steigrohrabschnitt (6) oder ein zweiter Ausleitungsabschnitt umfassend den Dampfableitungsabschnitt (7) geöffnet werden kann, nicht jedoch gleichzeitig der erste und der zweite Ausleitungsabschnitt.

9. Vorrichtung nach einem der vorhergehenden Ansprüche
***gekennzeichnet durch***
einen verschließbaren Zuleitungsabschnitt (17), mit dem dem Flüssigkeitsbehälter (1) Flüssigkeit (F) zuführbar ist und der so ausgebildet ist, dass zumindest ein Teil des Steigrohrabschnitts (6) und zumindest ein Teil des Dampfableitungsabschnitts (7) innerhalb des Öffnungsquerschnitts des Zuleitungsabschnitts (17) geführt sind.

10. Vorrichtung nach dem vorhergehenden Anspruch ***gekennzeichnet durch***
einen ersten, unteren Gehäuseabschnitt (18) umfassend zumindest einen Teil des Zuleitungsabschnitts (17), bevorzugt jedoch den kompletten Zuleitungsabschnitt (17), und einen unteren Teil (6u) des Steigrohrabschnitts (6) sowie gegebenenfalls auch einen unteren Teil (7u) des Dampfableitungsabschnitts (7), wobei der/die vorgenannte(n) untere(n) Teil(e) (6u, 7u) innerhalb des Öffnungsquerschnitts des Zuleitungsabschnitts (17) geführt ist/sind,
und
**durch** einen zweiten, oberhalb des unteren Gehäuseabschnitts (18) angeordneten und/oder anordbaren Gehäuseabschnitt (19) umfassend einen mit dem unteren Teil (6u) des Steigrohrabschnitts (6) verbindbaren und/oder verbundenen oberen Teil (6o) des Steigrohrabschnitts (6) und entweder, sofern im ersten Gehäuseabschnitt (18) ein unterer Teil (7u) des Dampfableitungsabschnitts (7) vorhanden ist, einen mit diesem unteren Teil (7u) verbindbaren und/oder verbundenen oberen Teil (7o) des Dampfableitungsabschnitts (7), oder einen in den Zuleitungsabschnitts (17) mündenden Teil des Dampfableitungsabschnitts (7),
wobei der zweite Gehäuseabschnitt (19) dann, wenn der erste, untere Gehäuseabschnitt (18) nicht den kompletten Zuleitungsabschnitt (17) umfasst, auch einen mit dem im unteren Gehäuseabschnitt (18) angeordneten Teil des Zuleitungsabschnitts (17) verbindbaren und/oder verbundenen, weiteren Teil des Zuleitungsabschnitts (17) umfasst,
wobei bevorzugt darüber hinaus der erste und der zweite Gehäuseabschnitt (18, 19) gegeneinander klappbar (k), gegeneinander verschieblich und/oder gegeneinander verdrehbar sind und/oder miteinander verbindbar und/oder verbunden sind.

11. Vorrichtung nach einem der vorhergehenden Ansprüche
***gekennzeichnet durch***
einen den Flüssigkeitsbehälter (1) umfassenden, zum Aufheizen mit der externen Heizquelle (H) ausgebildeten, unteren Gehäuseabschnitt (18) und
einen mit dem unteren Gehäuseabschnitt (18) verbindbaren, bevorzugt verschraubbaren, zumindest einen Teil des Auslassabschnitts (5) und bevorzugt auch einen Sammelbehälter zur Aufnahme von aus dem Auslassabschnitt (5) abgeführter Flüssigkeit umfassenden oberen Gehäuseabschnitt (19),
wobei ein dem unteren Gehäuseabschnitt (18) zugewandter Begrenzungsabschnitt (21) des oberen Gehäuseabschnitts (19) eine erste Durchgangsöffnung (22) aufweist, die mit dem Dampfableitungsabschnitt (7) verbunden und/oder ein Teil desselben ist, und wobei ein dem oberen Gehäuseabschnitt (19) zugewandter Begrenzungsabschnitt (23) des unteren Gehäuseabschnitts (18) eine zweite Durchgangsöffnung (24) aufweist, die mit dem Inneren des Flüssigkeitsbehälters (1) verbunden ist und
wobei **durch** das Verbinden der beiden Gehäuseabschnitte (18, 19) zwischen diesen ein abdichtend (d) verpresster Ringspalt (25) mit einer Dampfführung vom Inneren des Flüssigkeitsbehälters (1) über die zweite Durchgangsöffnung (24), das Innere des Ringspalts (25) und die erste Durchgangsöffnung (22) in den Dampfableitungsabschnitt (7) ausbildbar ist.

12. Vorrichtung nach einem der vorhergehenden Ansprüche
***dadurch gekennzeichnet, dass***
die Vorrichtung, bevorzugt ihr Dampfableitungsabschnitt (7), einen bevorzugt ein Druckventil (27) enthaltenden, ersten sicherheits-Ableitungsabschnitt (26) umfasst, der so ausgebildet ist, dass über ihn bei geöffnetem Durchströmabschnitt (2) und geöffnetem Steigrohrabschnitt (6) von erhitzter Flüssigkeit (F) stammender Dampf (D) aus dem Flüssigkeitsbehälter (1) an die Umgebung außerhalb der Vorrichtung abführbar ist, wenn der Druck dieses Dampfes (D) einen vordefinierten, ersten Sicherheitsdruck überschreitet, und dass mit ihm (26) bei geöffnetem Durchströmabschnitt (2) und geöffnetem Steigrohrabschnitt (6) ein Abführen eines solchen Dampfes (D) verhinderbar ist, wenn der Druck dieses Dampfes (D) den vordefinierten, ersten Sicherheitsdruck unterschreitet, wobei der erste Sicherheitsdruck bevorzugt im Bereich zwischen 1 und 200 mbar liegt.

13. Vorrichtung nach einem der vorhergehenden Ansprüche
***dadurch gekennzeichnet, dass***
die Vorrichtung, bevorzugt ihr Dampfableitungsabschnitt (7), einen bevorzugt ein Druckventil (29) enthaltenden, zweiten Sicherheits-Ableitungsabschnitt (28) umfasst, der so ausgebildet ist, dass über ihn bei geschlossenem Durchströmabschnitt (2), geschlossenem Steigrohrabschnitt (6) und/oder geschlossenem Dampfableitungsabschnitt (7) von erhitzter Flüssigkeit (F) stammender Dampf (D) aus dem Flüssigkeitsbehälter (1) an die Umgebung außerhalb der Vorrichtung abführbar ist, wenn der Druck dieses Dampfes (D) einen vordefinierten, zweiten Sicherheitsdruck überschreitet, und dass mit ihm (28) bei geschlossenem Durchströmabschnitt (2), geschlossenem Steigrohrabschnitt (6) und/oder geschlossenem Dampfableitungsabschnitt (7) ein Abführen eines solchen Dampfes (D) verhinderbar ist, wenn der Druck dieses Dampfes (D) den vordefinierten, zweiten Sicherheitsdruck unterschreitet, wobei der zweite Sicherheitsdruck bevorzugt im Bereich zwischen 2.5 bar und 3 bar liegt,
und/oder
dass die Vorrichtung, bevorzugt ihr Dampfableitungsabschnitt (7), einen bevorzugt ein manuell steuerbares Ventil (31) enthaltenden dritten Ableitungsabschnitt (30) umfasst, der so ausgebildet ist, dass über ihn von erhitzter Flüssigkeit (F) stammender Dampf (D) aus dem Flüssigkeitsbehälter (1) an die Umgebung außerhalb der Vorrichtung manuell abführbar ist.

14. Vorrichtung nach einem der zwei vorhergehenden Ansprüche
***dadurch gekennzeichnet, dass***
der erste Sicherheits-Ableitungsabschnitt (26), der zweite Sicherheits-Ableitungsabschnitt (28) und/oder der dritte Ableitungsabschnitt (30) in Strömungsrichtung gesehen zumindest abschnittsweise parallel zueinander und/oder zumindest abschnittsweise parallel zum Dampfableitungsabschnitt (7) angeordnet ist/sind.

15. Vorrichtung nach einem der vorhergehenden Ansprüche
***dadurch gekennzeichnet, dass***
die Vorrichtung und/oder der Flüssigkeitsbehälter (1), insbesondere ein Begrenzungs- oder Wandabschnitt derselben/desselben, ein Sicherheitsventil (32) zum Schutz der Vorrichtung und/oder des Flüssigkeitsbehälters (1) vor zu hohem Druck eines von erhitzter Flüssigkeit (F) stammenden Dampfes (D) aufweist, wobei das Sicherheitsventil (32) entsprechend eines Sicherheitsventils in einem Schnellkochtopf ausgebildet ist
und/oder
dadurch, dass die Vorrichtung durch das Fehlen jeglicher elektrischer und elektromechanischer Bauteile gekennzeichnet ist.

## Claims

1. Percolator-type device for preparing a hot drink comprising
a liquid container (1) in which liquid (F) can be heated by means of an external heat source (H) and/or to which heated liquid (F) can be supplied,
a throughflow portion (2) having an inlet (3) for heated liquid from the liquid container, having a throughflow volume (4) which is configured for receiving a substance (S) to be flowed through by this liquid and having an outlet portion (5) for discharging liquid, which has flowed through the throughflow volume, out of the throughflow volume,
a riser pipe portion (6) which connects the liquid container via the inlet to the throughflow volume,
a steam discharge portion (7) which is connected to the liquid container and by means of which steam (D) coming from heated liquid (F) can be discharged out of the liquid container, and a suction portion (12) which is integrated in the steam discharge portion (7) and via which an external liquid (M) can be suctioned in,
the suctioned-in external liquid (M) being able to be combined with the steam (D) discharged from the liquid container (1) and being able to be frothed up,
**characterised by**
a first opening- and closing means (8) which is configured for active opening and closing of the throughflow portion and/or of the riser pipe portion and a second opening- and closing means (9) which is configured for active opening and closing of the steam discharge portion (7),
the first opening- and closing means (8) and the second opening-and closing means (9) being able to be actuated independently of each other such that the device can be switched between the throughflow portion and/or the riser pipe portion, on the one hand, and the steam discharge portion (7) on the other hand.

2. Device according to the preceding claim,
**characterised in that**
the first opening- and closing means (8) is configured such that liquid from the liquid container (1) can be forced through the riser pipe portion, the inlet and the throughflow volume and be discharged via the outlet portion by means of a high pressure which is produced by heating liquid in the liquid container (1), only from a predefined minimum high pressure.

3. Device according to one of the preceding claims,
***characterised in that***
only upon reaching a/the predefined minimum high pressure is suctioning-in of the external liquid (M) via the suction portion (12) made possible, the latter being realized preferably by the second opening- and closing means (9) comprising a valve which is integrated in the steam discharge portion (7) and which only opens when the predefined minimum high pressure is exceeded.

4. Device according to one of the preceding claims, ***characterised in that***
the first opening- and closing means (8) is a valve,
and/or
**in that** the second opening- and closing means (9) is a valve.

5. Device according to one of the preceding claims,
***characterised in that***
the throughflow portion and/or the riser pipe portion, in particular the outlet portion of the throughflow portion, has a mechanism, preferably a throttle mechanism (10), in particular a narrow point which reduces the throughflow cross-section, which mechanism is configured such that liquid from the liquid container can be forced through the riser pipe portion, the inlet and the throughflow volume and be discharged via the outlet portion only from the predefined minimum high pressure,
and/or
**in that** the minimum high pressure in the steam discharge portion (7) is between 0.2 and 4 bar, in particular between 0.5 bar and 3 bar.

6. Device according to one of the preceding claims,
***characterised in that***
the steam discharge portion (7) comprises a Venturi nozzle (11), by means of which a/the external liquid (M) can be suctioned in by a/the suction portion (12) on the basis of the Venturi effect and can be discharged to an external vessel (T) by means of a Venturi nozzle outlet (13)
and/or
**in that** a/the suction portion (12) has a pump with which a/the external liquid (M) can be suctioned in and can be supplied to the steam (D) which is discharged from the liquid container (1) for frothing up
and/or
**in that** an outlet head (14) is disposed on the side of the throughflow portion (2), which is orientated away from the throughflow volume, and, viewed in the throughflow direction, at the end of or behind the outlet portion (5), by means of which outlet head liquid which has flowed through the throughflow volume can be discharged to an external vessel (T),
preferably the Venturi nozzle outlet (13) being configured as part of the outlet head (14) and/or integrated with the outlet head (14).

7. Device according to one of the preceding claims,
***characterised in that***
the second opening- and closing means (9) and/or the steam discharge portion (7) comprises/comprise a manually controllable valve (15) and/or a valve (16), preferably a multiway valve (16), in particular a 2/2-way valve, the valve (16), when a predefined opening preliminary pressure is exceeded, which preferably corresponds to the predefined minimum high pressure, opening, preferably completely opening, and, when a predefined closing preliminary pressure is fallen below, which is preferably identical to the opening preliminary pressure, closing, preferably completely closing,
preferably both a manually controllable valve (15) and a valve (16) which is disposed in the flow direction upstream of the latter being provided,
and/or
preferably the Venturi nozzle (11), viewed in the flow direction, being disposed downstream of the second opening- and closing means (9).

8. Device according to one of the preceding claims,
***characterised by***
a configuration, in particular a configuration of the first and of the second opening- and closing means (8, 9) such that only either a first discharge portion comprising the throughflow portion (2) and the riser pipe portion (6) or a second discharge portion comprising the steam discharge portion (7) can be opened but not, at the same time, the first and the second discharge portion.

9. Device according to one of the preceding claims,
***characterised by***
a closable supply portion (17) with which liquid (F) can be supplied to the liquid container (1) and which is configured such that at least a part of the riser pipe portion (6) and at least a part of the steam discharge portion (7) are guided inside the opening cross-section of the supply portion (17).

10. Device according to the preceding claim,
***characterised by***
a first, lower housing portion (18) comprising at least a part of the supply portion (17), but preferably the complete supply portion (17), and a lower part (6u) of the riser pipe portion (6) and if applicable also a lower part (7u) of the steam discharge portion (7), the above-mentioned lower part/parts (6u, 7u) being guided inside the opening cross-section of the supply portion (17),
and
by a second housing portion (19), which is disposed and/or can be disposed above the lower housing portion (18), comprising an upper part (6o) of the riser pipe portion (6), which can be connected and/or is connected to the lower part (6u) of the riser pipe portion (6), and either, provided that a lower part (7u) of the steam discharge portion (7) is present in the first housing portion (18), an upper part (7o) of the steam discharge portion (7) which can be connected and/or is connected to this lower part (7u), or a part of the steam discharge portion (7) which opens into the supply portion (17),
the second housing portion (19), when the first, lower housing portion (18) does not comprise the complete supply portion (17), also comprising a further part of the supply portion (17) which can be connected and/or is connected to the part of the supply portion (17) which is disposed in the lower housing portion (18),
furthermore, the first and the second housing portion (18, 19) preferably being collapsible (k) relative to each other, being displaceable relative to each other and/or being rotatable relative to each other and/or being connectable and/or connected to each other.

11. Device according to one of the preceding claims,
***characterised by***
a lower housing portion (18) which comprises the liquid container (1) and is configured for heating with the external heat source (H) and
an upper housing portion (19) which can be connected, preferably can be screwed, together with the lower housing portion (18) and comprises at least one part of the outlet portion (5) and preferably also a collection container for receiving liquid discharged from the outlet portion (5),
a limiting portion (21) of the upper housing portion (19) which is orientated towards the lower housing portion (18) having a first through-opening (22) which is connected to the steam discharge portion (7) and/or is a part of the same, and a limiting portion (23) of the lower housing portion (18), which is orientated towards the upper housing portion (19), having a second through-opening (24) which is connected to the interior of the liquid container (1) and
by connecting the two housing portions (18, 19), between these an annular gap (25) which is compressed to form a seal (d) being able to be configured with a steam guide from the interior of the liquid container (1) via the second through-opening (24), the interior of the annular gap (25) and the first through-opening (22) into the steam discharge portion (7).

12. Device according to one of the preceding claims,
***characterised in that***
the device, preferably the steam discharge portion (7) thereof, comprises a first safety discharge portion (26) which preferably comprises a pressure valve (27) and is configured such that, via said safety discharge portion, when the throughflow portion (2) is open and when the riser pipe portion (6) is open, steam (D) coming from heated liquid (F) can be discharged from the liquid container (1) to the environment outside the device if the pressure of this steam (D) exceeds a predefined, first safety pressure, and **in that**, with said safety discharge portion (26), when the throughflow portion (2) is open and when the riser pipe portion (6) is open, discharge of such steam (D) can be prevented if the pressure of this steam (D) falls below the predefined, first safety pressure, the first safety pressure being preferably in the range between 1 and 200 mbar.

13. Device according to one of the preceding claims,
***characterised in that***
the device, preferably the steam discharge portion (7) thereof, comprises a second safety discharge portion (28) which preferably comprises a pressure valve (29) and is configured such that, via said safety discharge portion, when the throughflow portion (2) is closed, when the riser pipe portion (6) is closed and/or when the steam discharge portion (7) is closed, steam (D) coming from heated liquid (F) can be discharged from the liquid container (1) to the environment outside the device if the pressure of this steam (D) exceeds a predefined, second safety pressure, and **in that**, with said safety discharge portion (28), when the throughflow portion (2) is closed, when the riser pipe portion (6) is closed and/or when the steam discharge portion (7) is closed, discharge of such steam (D) can be prevented if the pressure of this steam (D) falls below the predefined, second safety pressure, the second safety pressure being preferably in the range between 2.5 bar and 3 bar,
and/or
**in that** the device, preferably the steam discharge portion (7) thereof, comprises a third discharge portion (30) which preferably comprises a manually controllable valve (31) and which is configured such that, via it, steam (D) coming from heated liquid (F) can be discharged manually from the liquid container (1) to the environment outside the device.

14. Device according to one of the two preceding claims,
***characterised in that***
the first safety discharge portion (26), the second safety discharge portion (28) and/or the third discharge portion (30), viewed in the flow direction, is/are disposed at least in portions parallel to each other and/or at least in portions parallel to the steam discharge portion (7).

15. Device according to one of the preceding claims
***characterised in that***
the device and/or the liquid container (1), in particular a limiting- or wall portion of the same, has a safety valve (32) for protecting the device and/or the liquid container (1) from too high a pressure of steam (D) coming from heated liquid (F), the safety valve (32) being configured corresponding to a safety valve in a pressure cooker
and/ or
**in that** the device is **characterised by** the absence of any electrical and electromechanical components.

## Revendications

1. Dispositif selon le principe du tube ascendant pour la préparation d'une boisson chaude, comportant
un réservoir de liquide (1), dans lequel un liquide (F) peut être chauffé au moyen d'une source de chauffage (H) externe et/ou vers lequel peut être amené un liquide (F) chauffé,
une section de traversée (2) avec une entrée (3) pour le liquide chauffé provenant du réservoir de liquide, avec un volume de traversée (4), conçu pour recevoir la matière à traverser par ce liquide, et avec une section de sortie (5), par laquelle le liquide ayant traversé le volume de traversée est amené hors du volume de traversée,
une section à tube ascendant (6), qui relie le réservoir de liquide au volume de traversée par l'intermédiaire de l'entrée,
une section d'évacuation de la vapeur (7), qui est reliée au réservoir de liquide et par laquelle la vapeur (D) produite par le liquide (F) chauffé peut être évacuée hors du réservoir de liquide, et une section d'aspiration (12), qui est intégrée dans la section d'évacuation de la vapeur (7) et qui permet d'aspirer un liquide externe (M),
ledit liquide externe (M) aspiré pouvant être réuni à la vapeur (D) évacuée hors du réservoir de liquide (1) et pouvant mousser,
**caractérisé par**
un premier moyen d'ouverture et de fermeture (8), conçu pour ouvrir et fermer de manière active la section de traversée et/ou
la section à tube ascendant, et un deuxième moyen d'ouverture et de fermeture (9) pour ouvrir et fermer de manière active la section d'évacuation de la vapeur (7),
ledit premier moyen d'ouverture et de fermeture (8) et ledit deuxième moyen d'ouverture et de fermeture (9) pouvant être actionnés indépendamment l'un de l'autre, de telle sorte que le dispositif peut être commuté entre la section de traversée et/ou la section à tube ascendant, d'une part, et la section d'évacuation de la vapeur (7), d'autre part.

2. Dispositif selon la revendication précédente,
**caractérisé en ce que**
le premier moyen d'ouverture et de fermeture (8) est réalisé de telle sorte qu'au moyen d'une surpression, générée par le chauffage du liquide dans le réservoir de liquide (1), et uniquement à partir d'une surpression minimale prédéfinie, le liquide peut être poussé hors du réservoir de liquide (1) via la section à tube ascendant, l'entrée et le volume de traversée et peut être évacué via la section de sortie.

3. Dispositif selon l'une quelconque des revendications précédentes,
**caractérisé en ce que**,
uniquement lorsqu'une ou la surpression minimale prédéfinie est atteinte, le liquide externe (M) peut être aspiré via la section d'aspiration (12), cette aspiration étant réalisée de préférence par le fait que le deuxième moyen d'ouverture et de fermeture (9) comporte une valve, qui est intégrée dans la section d'évacuation de la vapeur (7) et qui s'ouvre seulement lorsque la surpression atteint une valeur supérieure à la surpression minimale prédéfinie.

4. Dispositif selon l'une quelconque des revendications précédentes,
**caractérisé en ce que**
le premier moyen d'ouverture et de fermeture (8) est une valve et/ou
le deuxième moyen d'ouverture et de fermeture (9) est une valve.

5. Dispositif selon l'une quelconque des revendications précédentes,
**caractérisé en ce que**
la section de traversée et/ou la section à tube ascendant, en particulier la section de sortie de la section de traversée comporte un système, de préférence un système d'étranglement (10), en particulier une zone rétrécie, qui diminue la section transversale d'écoulement et qui est configuré de telle sorte que, uniquement à partir de la surpression minimale prédéfinie, le liquide peut être poussé hors du réservoir de liquide via la section à tube ascendant, l'entrée et le volume de traversée et être évacué via la section de sortie,
et/ou
la surpression minimale dans la section d'évacuation de la vapeur (7) se situe entre 0,2 et 4 bar, en particulier entre 0,5 bar et 3 bar.

6. Dispositif selon l'une quelconque des revendications précédentes,
**Caractérisé en ce que**
la section d'évacuation de la vapeur (7) comporte un tube de Venturi (11), au moyen duquel un ou le liquide externe (M) peut être aspiré à travers une ou la section d'aspiration (12) en raison de l'effet Venturi et peut être transféré vers un réceptacle externe (T) via une sortie (13) du tube de Venturi,
et/ou
une ou la section d'aspiration (12) comporte une pompe qui permet d'aspirer un ou le liquide externe (M) et de l'acheminer vers la vapeur (D) évacuée hors du réservoir de liquide (1) en vue de le faire mousser,
et/ou
sur le côté de la section de traversée (2), détourné du volume de traversée, et, dans la direction de traversée, à la fin de la section de sortie (5) ou en aval de ladite section est disposée une tête de sortie (14), au moyen de laquelle le liquide ayant circulé à travers le volume de traversée peut être transféré dans un réceptacle externe (T),
la sortie (13) du tube de Venturi étant réalisée de préférence comme une partie de la tête de sortie (14) et/ou sous forme intégrée à la tête de sortie (14).

7. Dispositif selon l'une quelconque des revendications précédentes,
**caractérisé en ce que**
le deuxième moyen d'ouverture et de fermeture (9) et/ou la section d'évacuation de la vapeur (7) comporte/comportent une vanne (15) pouvant être commandée manuellement et/ou une vanne (16), de préférence une vanne multivoie (16), en particulier une vanne à 2/2 voies, ladite vanne (16) s'ouvrant, de préférence s'ouvrant complètement, lorsque la pression d'ouverture atteint une valeur supérieure à une pression d'ouverture prédéfinie qui de préférence correspond à la surpression minimale prédéfinie, et se fermant, de préférence se fermant complètement, lorsque la pression de fermeture atteint une valeur inférieure à une pression de fermeture prédéfinie identique à la pression d'ouverture,
de préférence, une vanne (15) pouvant être commandée manuellement, de même qu'une vanne (16), disposée en amont de cette dernière dans la direction d'écoulement, étant prévues,
et/ou
le tube de Venturi (11) étant disposé de préférence, dans la direction de traversée d'écoulement, en aval du deuxième moyen d'ouverture et de fermeture (9).

8. Dispositif selon l'une quelconque des revendications précédentes,
**caractérisé par**
une configuration, en particulier une configuration du premier et du deuxième moyen d'ouverture et de fermeture (8, 9), de telle sorte que peut s'ouvrir uniquement soit une première section de déversement comportant la section de traversée (2) et la section à tube ascendant (6), soit une deuxième section de déversement comportant la section d'évacuation de la vapeur (7), la première et la deuxième section de déversement ne pouvant pas s'ouvrir simultanément.

9. Dispositif selon l'une quelconque des revendications précédentes,
**caractérisé par**
une section d'amenée (17) pouvant être fermée, par laquelle le liquide (F) peut être amené dans le réservoir de liquide (1) et laquelle est configurée de telle sorte qu'au moins une partie de la section à tube ascendant (6) et au moins une partie de la section d'évacuation de la vapeur (7) sont guidées à l'intérieur de la section transversale d'ouverture de la section d'amenée (17).

10. Dispositif selon la revendication précédente,
**caractérisé par**
une première partie de boîtier (18) inférieure comportant au moins une partie de la section d'amenée (17), mais de préférence la section d'amenée (17) complète, et une partie inférieure (6u) de la section à tube ascendant (6), ainsi que, le cas échéant, aussi une partie inférieure (7u) de la section d'évacuation de la vapeur (7), ladite/lesdites partie(s) inférieure(s) (6u, 7u) étant guidée(s) à l'intérieur de la section transversale d'ouverture de la section d'amenée (17),
et
par une deuxième partie de boîtier (19), qui est disposée et/ou peut être disposée au-dessus de la partie de boîtier (18) inférieure et qui comporte une partie supérieure (6o) de la section à tube ascendant (6), reliée et/ou pouvant être reliée à la partie inférieure (6u) de la section à tube ascendant (6), et soit, dans la mesure où une partie inférieure (7u) de la section d'évacuation de la vapeur (7) est prévue dans la première partie de boîtier (18), une partie supérieure (7o) de la section d'évacuation de la vapeur (7) reliée et/ou pouvant être reliée à ladite partie inférieure (7u), soit une partie de la section d'évacuation de la vapeur (7), qui débouche dans la section d'amenée (17),
la deuxième partie de boîtier (19) comportant, lorsque la première partie de boîtier (18) inférieure ne comporte pas la section d'amenée (17) complète, également une autre partie de la section d'amenée (17), reliée et/ou pouvant être reliée à la partie de la section d'amenée (17), disposée dans la partie de boîtier (18) inférieure,
de préférence, la première et la deuxième partie de boîtier (18, 19) pouvant, en outre, être rabattues (k) l'une contre l'autre, pouvant être déplacées l'une contre l'autre et/ou pouvant tourner l'une par rapport à l'autre et/ou étant reliées et/ou pouvant être reliées l'une à l'autre.

11. Dispositif selon l'une quelconque des revendications précédentes,
**caractérisé par**
une partie de boîtier (18) inférieure, comportant le réservoir de liquide (1) et conçue pour le chauffage au moyen de la source de chaleur (H) externe, et
une partie de boîtier (19) supérieure pouvant être reliée à la partie de boîtier (18) inférieure, de préférence par vissage, et comportant au moins une partie de la section de sortie (5) et de préférence aussi un récipient collecteur destiné à recevoir le liquide évacué hors de la section de sortie (5),
une section de délimitation (21) de la partie de boîtier (19) supérieure, laquelle est orientée vers la partie de boîtier (18) inférieure, comportant une première ouverture de passage (22) qui est reliée à la section d'évacuation de la vapeur (7) et/ou constituant une partie de celle-ci, et une section de délimitation (23) de la partie de boîtier (18) inférieure, laquelle est orientée vers la partie de boîtier (19) supérieure, comportant une deuxième ouverture de passage (24) qui est reliée avec l'intérieur du réservoir de liquide (1), et
une fente annulaire (25) comprimée de manière étanche (d) pouvant se former entre les deux parties de boîtier (18, 19) sous l'effet de l'assemblage de celles-ci, avec un guidage de la vapeur depuis l'intérieur du réservoir de liquide (1) vers la section d'évacuation de la vapeur (7) en passant par la deuxième ouverture de passage (24), l'intérieur de la fente annulaire (25) et la première ouverture de passage (22).

12. Dispositif selon l'une quelconque des revendications précédentes,
**caractérisé en ce que**
ledit dispositif, de préférence sa section d'évacuation de la vapeur (7), comporte une première section de sûreté et évacuation (26), qui contient de préférence une soupape de pression (27) et qui est configurée de telle sorte que, par son intermédiaire, lorsque la section de traversée (2) est ouverte et que la section à tube ascendant (6) est ouverte, la vapeur (D) produite par le liquide (F) chauffé peut être évacuée hors du réservoir de liquide (1) dans l'environnement extérieur au dispositif lorsque la pression de cette vapeur (D) est supérieure à une première pression de sûreté prédéfinie, et **en ce que** par celle-ci (26), lorsque la section de traversée (2) est ouverte et que la section à tube ascendant (6) est ouverte, une évacuation d'une telle vapeur (D) peut être empêchée lorsque la pression de cette vapeur (D) est inférieure à la première pression de sûreté prédéfinie, la première pression de sûreté se situant de préférence dans une plage entre 1 et 200 mbar.

13. Dispositif selon l'une quelconque des revendications précédentes,
**caractérisé en ce que**
ledit dispositif, de préférence sa section d'évacuation de la vapeur (7), comporte une deuxième section de sûreté et évacuation (28), qui contient de préférence une soupape de pression (29) et qui est configurée de telle sorte que, par son intermédiaire, lorsque la section de traversée (2) est fermée, que la section à tube ascendant (6) est fermée et/ou que la section d'évacuation de la vapeur (7) est fermée, la vapeur (D) produite par le liquide (F) chauffé peut être évacuée hors du réservoir de liquide (1) dans l'environnement extérieur audit dispositif lorsque la pression de cette vapeur (D) est supérieure à une deuxième pression de sûreté prédéfinie, et **en ce que** par celle-ci (28), lorsque la section de traversée (2) est fermée, que la section à tube ascendant (6) est fermée et/ou que la section d'évacuation de la vapeur (7) est fermée, une évacuation d'une telle vapeur (D) peut être empêchée lorsque la pression de cette vapeur (D) est inférieure à la deuxième pression de sûreté prédéfinie, la deuxième pression de sûreté se situant de préférence dans une plage entre 2,5 bar et 3 bar,
et/ou
ledit dispositif, de préférence sa section d'évacuation de la vapeur (7), comporte une troisième section d'évacuation (30) qui contient, de préférence, une valve (31) pouvant être commandée manuellement et qui est configurée de telle sorte que, par son intermédiaire, la vapeur (D) produite par le liquide (F) chauffé peut être évacuée manuellement hors du réservoir de liquide (1) dans l'environnement extérieur audit dispositif.

14. Dispositif selon l'une des deux revendications précédentes,
**caractérisé en ce que**
la première section de sûreté et évacuation (26), la deuxième section de sûreté et évacuation (28) et/ou la troisième section d'évacuation (30) est/sont disposée(s), par référence à la direction d'écoulement, au moins par zones parallèlement entre elles et/ou au moins par zones parallèlement à la section d'évacuation de la vapeur (7).

15. Dispositif selon l'une quelconque des revendications précédentes,
**caractérisé en ce que**
ledit dispositif et/ou le réservoir de liquide (1), en particulier une section de délimitation ou partie de paroi de ceux-ci, comportent une soupape de sûreté (32) en vue de protéger ledit dispositif et/ou le réservoir de liquide (1) contre une pression trop élevée d'une vapeur (D) produite par le liquide (F) chauffé, ladite soupape de sûreté (32) étant configurée de manière analogue à une soupape de sûreté d'une cocotte-minute,
et/ou
ledit dispositif est **caractérisé par** l'absence de tout composant électrique et électromécanique.
